(19) Europäisches Patentamt
European Patent Office
Office européen des brevets

(11) EP 2 372 018 B1

(12) **EUROPEAN PATENT SPECIFICATION**

(45) Date of publication and mention of the grant of the patent:
**04.09.2013 Bulletin 2013/36**

(21) Application number: **09834916.0**

(22) Date of filing: **24.12.2009**

(51) Int Cl.:
***D06M 15/227*** *(2006.01)* ***C08L 23/10*** *(2006.01)*
***C08L 27/22*** *(2006.01)* ***D06M 101/00*** *(2006.01)*
***D06M 101/20*** *(2006.01)* ***D06M 101/40*** *(2006.01)*
***D01F 11/14*** *(2006.01)* ***D06M 15/263*** *(2006.01)*

(86) International application number:
**PCT/JP2009/071388**

(87) International publication number:
**WO 2010/074118 (01.07.2010 Gazette 2010/26)**

(54) **AQUEOUS DISPERSION FOR TREATMENT OF FIBERS**

WÄSSRIGE DISPERSION ZUR FASERBEARBEITUNG

DISPERSION AQUEUSE POUR LE TRAITEMENT DE FIBRES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.12.2008 JP 2008330516**

(43) Date of publication of application:
**05.10.2011 Bulletin 2011/40**

(73) Proprietor: **Mitsui Chemicals, Inc.**
**Tokyo 105-7117 (JP)**

(72) Inventors:
- **ASAMI, Keiichi**
**Sodegaura-shi**
**Chiba 299-0265 (JP)**
- **HONMA, Masato**
**Iyo-gun**
**Ehime 791-3193 (JP)**
- **TSUCHIYA, Atsuki**
**Iyo-gun**
**Ehime 791-3193 (JP)**

(74) Representative: **HOFFMANN EITLE**
**Patent- und Rechtsanwälte**
**Arabellastrasse 4**
**81925 München (DE)**

(56) References cited:
**WO-A1-2006/101269**
**WO-A2-2005/012604**
**JP-A- 2005 170 691**
**JP-A- 2005 289 698**
**JP-A- 2006 124 847**
**US-A1- 2005 124 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to an aqueous dispersion for fiber treatment. Specifically, it relates to an aqueous dispersion used for treating fibers such as glass fibers, carbon fibers, alumina fibers, ceramic fibers, boron fibers, and also relates to an aqueous dispersion used for treating polyolefin fibers, ABS fibers, nylon fibers, polyester fibers.

TECHNICAL BACKGROUND

Fibers are conventionally treated with a sizing agent as a fiber bundle after melt spinning. Examples of the sizing agent generally used are a starch aqueous solution, paraffin wax, vegetable oil and emulsions. Furthermore, when a fiber is used for resin reinforcing, the fiber is treated with a silane coupling agent, urethane, epoxy, acryl emulsion and the like in order to improve the adhesion between a matrix resin and the fiber.

However, when the matrix resin is a polyolefin in particular, the fiber treated with the above emulsion has insufficient adhesion between the matrix resin and the fiber, the strength of the fiber reinforced resin is not improved. The advent of a further favorable emulsion has been desired.

Patent document 1 discloses an aqueous emulsion, which essentially comprises a polypropylene resin modified with an unsaturated dicarboxylic acid or its salt. Patent document 2 discloses an aqueous suspension, which comprises two kinds of acid modified propylene resins. These sizing agents for fibers have a polar group in their main chains, sufficient adhesion on both of the fiber surface and the matrix resin cannot be exhibited, and handling properties of the fiber bundle are not sufficient enough.

Patent document 3 discloses a laminated dried non-woven fabric having a three layer integral structure such that fibers of each layer and fibers in the neighbored layers are bonded, which fabric is a laminated matt having a layer of 40 to 95 % by weight of a pulp fiber and 5 to 60 % by weight of a fiber shaped or granular thermoplastic resin and obtainable by thermal treating at a temperature of higher than the melting point of a low melting point component of the complex fiber, higher than the melting point of the thermoplastic resin, and lower than the melting point of a high melting point component of the complex fiber. Since the laminated dried non-woven fabric is prepared through the heat treatment step in the patent document, the resins used in this document are limited.

PRIOR ART

Patent document

Patent document 1: JP-A-H6(1994)-107442
Patent document 2: WO/2006/101269
Patent document 3: JP-A-S56(1981)-91052

SUMMARY OF THE INVENTION

PROBLEMS TO BE SOLVED BY THE INVENTION

The present invention relates to improvement of the above issues and it is an object of the present invention to provide an aqueous dispersion for fiber treatment having excellent fiber sizing properties and capable of improving the adhesion between a fiber and a matrix resin, and also provide an aqueous dispersion for fiber treatment having excellent integrity between various kinds of fibers with heat treatment at a low temperature and also giving excellent flexibility of the treated fibers.

MEANS FOR SOLVING THE PROBLEMS

The present inventors have been earnestly studied on the above subjects and found that an aqueous dispersion for fiber treatment which dispersion comprises a specific first propylene resin, a second propylene resin at least containing a carboxylic acid salt group bonded to a polymer chain of the propylene resin, an anion type and/or a nonion type surfactant and water has excellent fiber sizing properties and improves the adhesion between a fiber and a matrix resin. Thus, the present invention has been accomplished.

That is to say, the present invention relates to the following aqueous dispersions of [1] to [20].

[1] An aqueous dispersion for fiber treatment which dispersion comprises:

(A) a first propylene resin comprising 50 to 99 % by mole of a constituting unit derived from propylene,
(B) a second propylene resin which is a propylene resin at least containing a carboxylic acid salt bonded to a polymer chain and contains a group represented by the following formula (1) in a concentration of 0.05 to 5 mmol equivalent weight per 1 gram of the resin;

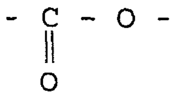
... (1)

(C) an anion type and/or nonion type surfactant, and
(D) water,
wherein resin solid components of the aqueous dispersion derived from the resins (A) and (B) are dispersed in the water,
the aqueous dispersion contains 0.3 to 45 parts by weight of the resin (B) and 0.5 to 40 parts by weight of the surfactant (C) based on 100 parts by weight of the resin (A) and has a water content of 3 to 90 % by weight,
the weight average molecular weight of the resin (A) (hereinafter referred to "Mw(a)") and the weight average molecular weight of the resin (B) (hereinafter referred to "Mw(b)") are different each other, the Mw (a) is larger than the Mw (b), and the resin solid components derived from the resins (A) and (B) have an average particle diameter of 0.03 to 3 μm.

[2] The aqueous dispersion for fiber treatment according to [1] wherein the resin (A) is a propylene resin unmodified substantially.
[3] The aqueous dispersion for fiber treatment according to [2] wherein the resin (A) comprises a propylene resin (A-1) having a melt index at 230 ° C (MI) of not less than 50.
[4] The aqueous dispersion for fiber treatment according to [3] wherein the resin (A-1) has a weight average molecular weight Mw of not less than 30,000 and less than 150,000.
[5] The aqueous dispersion for fiber treatment according to [3] or [4] wherein the resin (A) comprises the resin (A-1) and a propylene resin (A-2) having a weight average molecular weight Mw of not less than 150,000 and not more than 500, 000 and containing a constituting unit derived from propylene in an amount of 50 to 99 % by mole.
[6] The aqueous dispersion for fiber treatment according to [5] wherein the weight ratio of the resin (A-1) to the resin (A-2) [(A-1):(A-2)] is 100:0 to 30:70.
[7] The aqueous dispersion for fiber treatment according to any one of [2] to [6] wherein the resin (B) has a weight average molecular weight of 1,000 to 50,000 and contains a constituting unit derived from propylene in an amount of 50 to 100 % by mole.
[8] The aqueous dispersion for fiber treatment according to [1] wherein the resin (A) comprises a propylene resin (A-1) having a melt index at 230° C (MI) of not less than 50.
[9] The aqueous dispersion for fiber treatment according to [8] wherein the resin (A-1) has a weight average molecular weight of not less than 30,000 and less than 150,000.
[10] The aqueous dispersion for fiber treatment according to [8] or [9] wherein the resin (A) comprises the resin (A-1) and a propylene resin (A-2) having a weight average molecular weight Mw of not less than 150, 000 and not more than 500, 000 and containing a constituting unit derived from propylene in an amount of 50 to 99 % by mole.
[11] The aqueous dispersion for fiber treatment according to [10] wherein the weight ratio of the resin (A-1) to the resin (A-2) [(A-1):(A-2)] is 100:0 to 30:70.
[12] The aqueous dispersion for fiber treatment according to any one of [8] to [11] wherein the resin (B) has a weight average molecular weight of 1,000 to 50,000 and contains a constituting unit derived from propylene in an amount of 50 to 100 % by mole.
[13] The aqueous dispersion for fiber treatment according to any one of [8] to [12] wherein the resin (A-1) is a propylene resin (A-3) which has a weight average molecular weight Mw of more than 50,000 and less than 150,000, and contains at least a carboxylic acid salt bonded to a polymer chain, a constituting unit derived from propylene in an amount of 50 to 99 % by mole and a group represented by the formula (1)
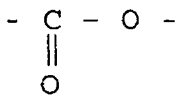 ... (1)

in a concentration of 0.05 to 5 mmol equivalent weight per 1 gram of the resin.

[14] The aqueous dispersion for fiber treatment according to any one of [10] to [13] wherein the resin (A-2) is a propylene resin (A-4) which has a weight average molecular weight of not less than 150, 000 and not more than 500, 000, and contains at least a carboxylic acid salt bonded to a polymer chain, a constituting unit derived from propylene in an amount of 50 to 99 % by mole and a group represented by the formula (1)

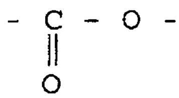 ... (1)

in a concentration of 0.05 to 5 mmol equivalent weight per 1 gram of the resin.

[15] The aqueous dispersion for fiber treatment according to any one of [1] to [14] wherein the resin (B) is a propylene resin (B-1) which further comprises a polymer modified with an unsaturated vinyl group other than olefins.

[16] The aqueous dispersion for fiber treatment according to [13] wherein the resin (A-3) is a propylene resin (A-5), which further comprises a polymer modified with an unsaturated vinyl group other than olefins.

[17] The aqueous dispersion for fiber treatment according to [14] wherein the resin (A-4) is a propylene resin (A-6), which further comprises a polymer modified with an unsaturated vinyl group other than olefins.

[18] The aqueous dispersion for fiber treatment according to any one of [1] to [17] which is used for carbon fiber treatment.

[19] The aqueous dispersion for fiber treatment according to any one of [1] to [17] which is used for glass fiber treatment.

[20] The aqueous dispersion for fiber treatment according to any one of [1] to [17] which is used for polyolefin fiber treatment.

EFFECT OF THE INVENTION

The aqueous dispersion for fiber treatment according to the present invention has excellent fiber sizing properties and can improve the adhesion between a fiber and a matrix resin. As a result, fiber has excellent handling properties and fiber reinforced resins having excellent mechanical strength can be prepared. Furthermore, since it has excellent integrity of fibers by heat treatment at a low temperature, resins having excellent fiber flexibility can be prepared.

BRIEF DESCRIPTION OF DRAWING

Fig. 1 is a schematic view of a fiber passage used for a method of evaluating the number of fluffs caused by friction.

EMBODIMENT FOR CARRYING OUT THE INVENTION

The present invention will be described in detail below.

The aqueous dispersion for fiber treatment according to the present invention comprises:

(A) a first propylene resin comprising 50 to 99 % by mole of a constituting unit derived from propylene,

(B) a second propylene resin which is a propylene resin containing at least a carboxylic acid salt bonded to a polymer chain and contains a group represented by the following formula (1) in a concentration of 0.05 to 5 mmol equivalent weight per 1 gram of the resin;

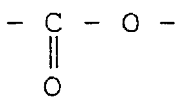 ... (1)

(C) an anion type and/or nonion type surfactant, and
(D) water.

The aqueous dispersion for fiber treatment according to the present invention comprises the components described above in specific ratio of amounts. That is, based on 100 parts by weight of the resin (A), the amount of the resin (B) is 0.3 to 45 parts by weight, preferably 0.5 to 40 parts by weight, more preferably 0.7 to 35 parts by weight in the viewpoint of the adhesion with polar materials. The amount of the surfactant (C) is 0.5 to 40 parts by weight, preferably 0.8 to 30 parts by weight, more preferably 1 to 20 parts by weight in the viewpoint of dispersibility in water. The amount of the water (D) is 3 to 90 % by weight in the aqueous dispersion.

The weight average molecular weight of the resin (A) (hereinafter occasionally referred to "Mw(a)") and the weight average molecular weight of the resin (B) (hereinafter occasionally referred to "Mw(b)") are different each other, and the Mw(a) is larger than the Mw(b). The difference between the Mw (a) and the Mw(b) (Mw(a) - Mw(b)) is preferably not less than 1,000, more preferably not less than 3,000, and furthermore preferably not less than 5,000. When the Mw (a) is larger than Mw(b) as described above, the resin (B) which contributes to adhesion with fibers easily moves to the fiber surface.

The aqueous dispersion for fiber treatment according to the present invention is an aqueous dispersion that the resin solid components derived from the resins (A) and (B) are dispersed in water. The resin solid components derived from the resins (A) and (B) have an average particle diameter of 0.03 to 3 μm, preferably 0.05 to 2 μm, more preferably 0.08 to 1 μm. The resin solid components preferably have an average particle diameter in the above range in the viewpoint of adhesion with fibers.

The above-mentioned components are described below.

[First propylene resin containing 50 to 99 % by mole of a constituting unit derived from propylene (A)]

Examples of the first propylene resin containing 50 to 99 % by mole of a constituting unit derived from propylene (A) used in the present invention are copolymers of propylene and at least one kind of α-olefins. The resin usually has an α-olefin content of 1 to 50 % by mole, preferably 3 to 50 % by mole, more preferably 5 to 45 % by mole, in the viewpoint of dispersibility of carbon fibers at the time of molding. Examples of the α-olefin are α-olefins of 2 to 12 carbon atoms excluding propylene such as ethylene, 1-butene, 3-methyl-1-butene, 4-methyl-1-pentene, 3-methyl-1-pentene, 1-hexene, 1-heptene, 1-octene, 1-decene and 1-dodecene. Among them, preferable examples are an ethylene/propylene copolymer, a propylene/1-butene copolymer and an ethylene/propylene/1-butene copolymer in the viewpoint of compatibility with polypropylene used for a matrix resin and compatibility with the second propylene resin (B).

The resin (A) has a weight average molecular weight (hereinafter occasionally abbreviated to Mw) of preferably 30,000 to 500,000, more preferably 35, 000 to 450,000. In the invention, the weight average molecular weight Mw is determined relative to a polystyrene standard by gel permeation chromatography (GPC).

The resin (A) may contain a carboxylic acid salt bonded to a polymer chain, and further may contain an unsaturated vinyl group other than olefins. Furthermore, the resin (A) may be modified or may be a substantially unmodified polypylene resin. Herein, the term "substantially unmodified" means that "the resin is not modified at all" or "even if modified, the amount of the modified resin is very slight". The very slight amount is less than 0.01 mmol equivalent weight converted to COO group, preferably not more than 0.005 mmol equivalent, more preferably not more than 0.001 mmol equivalent.

The resin (A) preferably comprises a propylene resin (A-1) having MI (melt index: 230 C) (hereinafter occasionally referred to "MI") of not less than 50. The resin (A) preferably comprises the propylene resin (A-1) such that the weight average molecular weight Mw is not less than 30,000 and less than 150,000, MI is not less than 50 and the constituting unit derived from propylene is contained in an amount of 50 to 99 % by mole, or preferably comprises a mixture of the propylene resin (A-1) and a propylene resin (A-2) such that the weight average molecular weight Mw is not less than 150,000 and not more than 500,000 and the constituting unit derived from propylene is contained in an amount of 50 to 99 % by mole. The ratio of (A-1) to (A-2) is preferably 100:0 to 30:70, more preferably 100:0 to 35:65. When the resin (A) is the mixture of the propylene resin (A-1) and the propylene resin (A-2) in the present invention, the weight average molecular weight Mw of the resin (A) is an arithmetic mean of the weight average molecular weights of the propylene resins.

The resin (A-1) has a weight average molecular weight Mw (GPC) of not less than 30, 000 and less than 150, 000, and MI (melt index: 230 °C) of not less than 50, and contains 50 to 99 % by mole of a constituting unit derived from propylene. The Mw is more preferably 35,000 to 140,000, and the MI is more preferably not less than 60 and less than 1,000, furthermore preferably not less than 70 and less than 900. The amount of the constituting unit derived from propylene is preferably 55 to 97 % by mole, more preferably 55 to 95 % by mole. The resin (A-1) preferably has the above properties in these ranges because the dispersibility of fibers at the time of molding is improved, integrity and

flexibility of fibers are improved in the use as sizing agents, and the mechanical strength of a resulting molded material is improved. Particularly, when the MI is low, the film forming properties (covering properties) of a resin on the fiber surface is apt to be lowered, the dispersibility of fibers at the time of molding is lowered, and the mechanical strength of a molded material is lowered. The propylene resin having MI (melt index: 230 ° C) of not less than 50 preferably has a molecular weight distribution (Mw/Mn) of not less than 2.5. Although the upper limit of the molecular weight distribution (Mw/Mn) is not particularly limited, it is preferably not more than 50, more preferably not more than 30.

The propylene resin (A-1) may be a propylene resin (A-3) which has a weight average molecular weight Mw of more than 50,000 and less than 150,000, and contains at least a carboxylic acid salt bonded to a polymer chain and contains the group represented by the formula (1) in a concentration of 0.05 to 5 mmol equivalent weight per 1 g of the resin. Furthermore, the resin (A-1) may be a propylene resin (A-5) containing a polymer modified by an unsaturated vinyl group other than olefins. The propylene resin (A-5) preferably contains the polymer modified by an unsaturated vinyl group other than olefins in an amount of 0.1 to 50 parts by weight based on 100 parts by weight of the propylene resin (A-5).

The propylene resin (A-2) has a weight average molecular weight of not less than 150,000 and not more than 500,000 and contains a unit derived from propylene in an amount of 50 to 99 % by mole, preferably 50 to 97 % by mole, more preferably 50 to 95 % by mole. The Mw thereof is preferably 150,000 to 450,000. The propylene resin (A-2) preferably has these properties in the above ranges because the adhesion strength between the fiber surface and a matrix resin is improved. The propylene resin (A-2) may be a propylene resin (A-4) at least containing a carboxylic acid salt bonded to a polymer chain and the group represented by the formula (1) in a total concentration of 0.05 to 5 mmol equivalent weight per 1 gram of the resin, or may be a propylene resin (A-6) containing a polymer modified with an unsaturated vinyl group other than olefins. The amount of the polymer modified with an unsaturated vinyl group other than olefins is preferably 0.1 to 50 parts by weight based on 100 parts by weight of the propylene resin (A-6).

The raw materials of the propylene resins (A-3) and (A-4) can be obtained by various methods. For examples, there are a method of allowing a propylene resin to react with an ethylene unsaturated carboxylic acid having an unsaturated vinyl group in an organic solvent in the presence of a polymerization initiator, and then removing the solvent, a method of preparing a melt by heat melting a propylene resin, allowing the melt to react with a carboxylic acid having an unsaturated vinyl group and a polymerization initiator with stirring, and a method of mixing a propylene resin, a carboxylic acid having an unsaturated vinyl group and a polymerization initiator, feeding the mixture into an extruder and reacting it with heat kneading.

Examples of the ethylene unsaturated carboxylic acid are (meth)acrylic acid, maleic acid, fumaric acid, tetrahydrophthalic acid, itaconic acid, citraconic acid, crotonic acid and isocrotonic acid. Examples of anhydrides thereof are Nadic acid ™ (endocis-bicyclo[2.2.1] hepto-5-ene-2,3-dicarboxylic acid), maleic anhydride and anhydrous citraconic acid. These monomers may be used singly or two or more may be mixed for use. Among them, acid anhydrides are preferred and, furthermore, maleic anhydride is preferred.

Examples of the organic solvent are aromatic hydrocarbons such as xylene, toluene and ethylbenzene; aliphatic hydrocarbons such as hexane, heptane, octane, decane, isooctane and isodecane; alicyclic hydrocarbons such as cyclohexane, cyclohexene, methylcyclohexane and ethylcyclohexane; ester solvents such as ethyl acetate, n-butyl acetate, cellosolve acetate, propylene glycol monomethylether acetate, propylene glycol monoethylether acetate and 3-methoxybutyl acetate; and ketone solvents such as methylethyl ketone and methylisobutyl ketone. Two or more of these solvents may be used for use. Among these solvents, aromatic hydrocarbons, aliphatic hydrocarbons and alicyclic hydrocarbons are preferred and further aliphatic hydrocarbons and alicyclic hydrocarbons are more preferably used.

The resins (A-3) and (A-4) can be obtained by neutralizing or saponifying the raw materials of the resins (A-3) and (A-4) in preparing the aqueous dispersion. As a basic substance used in the neutralization or saponification in preparing the aqueous dispersion, there are alkali metals and/or alkali earth metals and/or other metals such as sodium, potassium, lithium, calcium, magnesium and zinc; inorganic amines such as hydroxylamine and ammonium hydroxide; organic amines such as ammonia, (tri)methylamine, (tri) ethanol amine, (tri)ethylamine, dimethylethanol amine and morpholine; and sodium oxides, sodium peroxides, oxides of alkali metals and/or alkali earth metals and/or other metals, hydroxides, hydrides, weak acid salts of alkali metals and/or alkali earth metals and/or other metals such as sodium carbonate.

Preferable examples of the carboxylic acid salt group or the carboxylic acid ester group neutralized or saponified with the basic substance are carboxylic acid alkali metal salts such as sodium carboxylate and potassium carboxylate or ammonium carboxylate.

The degree of neutralization or the degree of saponification is usually 50 to 100%, preferably 70 to 100%, more preferably 85 to 100% from the viewpoint of the stability of the aqueous dispersion and the adhesion with fibers.

Therefore, all the carboxylic acid groups in the resins (A-3) and (A-4) is desirably neutralized or saponified by the above basic substance, but a part thereof may be remained without neutralization or saponification.

Examples of the polymerization initiator used in the present invention are benzoyl peroxide, dichlorobenzoyl peroxide, dicumylperoxide, di-tert-butyl peroxide and 2,5-dimethyl-2,5-di(peroxybenzoate)hexyne-3,_ 1,4-bis(tert-butylperoxyisopropyl)benzene. These may be used singly or two or more may be mixed for use.

The resins (A-5) and (A-6) can be prepared by various methods. For example, there are:

a method of allowing a propylene resin to react with a ethylene unsaturated carboxylic acid having an unsaturated vinyl group in an organic solvent in the presence of a polymerization initiator, and then to react with a monomer having an unsaturated vinyl group other than olefins in the presence of a polymerization initiator and removing the solvent,
a method of allowing a propylene resin to react with an ethylene unsaturated carboxylic acid having an unsaturated vinyl group and a monomer having an unsaturated vinyl group other than olefins in an organic solvent in the presence of a polymerization initiator and then removing the solvent,
a method of allowing a propylene resin to react with an ethylene unsaturated carboxylic acid having an unsaturated vinyl group and a polymer of a monomer having an unsaturated vinyl group other than olefins in the organic solvent in the presence of the polymerization initiator and then removing the solvent,
a method of allowing a melt obtained by heat melting a propylene resin to react with a carboxylic acid having an unsaturated vinyl group and a polymerization initiator under stirring and further to react with a monomer having an unsaturated vinyl group other than olefins in the presence of a polymerization initiator,
a method of allowing a melt obtained by heat melting a propylene resin to react with a carboxylic acid having an unsaturated vinyl group, and a monomer having an unsaturated vinyl group other than olefins in the presence of a polymerization initiator,
a method of allowing a melt obtained by heat melting a propylene resin to react with a carboxylic acid having an unsaturated vinyl group and a copolymer of monomers having an unsaturated vinyl group other than olefins in the presence of a polymerization initiator,
a method of allowing a melt obtained by heat melting a propylene resin to react with a carboxylic acid having an unsaturated vinyl group and a polymer of monomers having an unsaturated vinyl group other than olefins in the presence of a polymerization initiator,
a method of feeding a mixture of a propylene resin, a carboxylic acid having an unsaturated vinyl group and a polymerization initiator to an extruder and carrying out reaction with heat kneading, and further feeding a mixture of a monomer having an unsaturated vinyl group other than olefins and a polymerization initiator into the extruder and carrying out the reaction with heat kneading,
a method of feeding a mixture of a propylene resin, a carboxylic acid having an unsaturated vinyl group and a mixture of a monomer having an unsaturated vinyl group other than olefins and a polymerization initiator into an extruder and carrying out the reaction with heat kneading, and
a method of feeding a propylene resin, a carboxylic acid having an unsaturated vinyl group and a mixture of a polymer of monomers having an unsaturated vinyl group other than olefins and a polymerization initiator into an extruder and carrying out the reaction with heat kneading.

Examples of the monomer having an unsaturated vinyl group other than olefins are:

(meth)acrylic acid esters such as methyl(meth)acrylate, ethyl(meth)acrylate, propyl(meth)acrylate, n-butyl(meth) acrylate, i-butyl(meth)acrylate, tert-butyl(meth)acrylate, n-amyl(meth)acrylate, isoamyl(meth)acrylate, n-hexyl (meth)acrylate, 2-ethylhexyl(meth)acrylate, octyl(meth)acrylate, decyl(meth)acrylate, dodecyl(meth)acrylate, octadecyl(meth)acrylate, stearyl(meth)acrylate, tridecyl(meth)acrylate, lauroyl(meth) acrylate, cyclohexyl (meth) acrylate, benzyl (meth) acrylate, phenyl(meth)acrylate, isoboronyl(meth)acrylate, dicyclopentanyl(meth)acrylate, dicyclopentenyl(meth)acrylate, dimethylaminoethyl (meth) acrylate, and diethylaminoethyl(meth)acrylate;
hydroxyl group-containing vinyls such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate and 2-hydroxy-3-phenoxypropyl acrylate;
epoxy group-containing vinyls such as glycidyl (meth)acrylate, and methylglycidyl (meth)acrylate; isocyanate group-containing vinyls such as vinyl isocyanate and isopropenyl isocyanate;
aromatic vinyls such as styrene, $\alpha$-methylstyrene, vinyl toluene and t-butyl styrene;
amides such as acrylamide, methacrylamide, N-methylol methacrylamide, N-methylol acrylamide, diacetone acrylamide and maleic acid amide;
vinyl esters such as vinyl acetate and vinyl propionate;
aminoalkyl(meth)acrylates such as N,N-dimethylaminoethyl (meth)acrylate, N,N-diethylaminoethyl (meth)acrylate, N,N-dimethylaminopropyl (meth)acrylate, N,N-dipropylaminoethyl (meth)acrylate, N,N-dibutylaminoethyl (meth)acrylate and N,N-dihydroxyethyl aminoethyl (met)acrylate;
unsaturated sulfonic acids such as styrene sulfonic acid, styrene sulfonic acid soda and 2-acrylamide-2-methylpropane sulfonic acid; and

unsaturated phosphoric acids such as mono(2-methacryloyloxy ethyl)acid phosphate and mono(2-acryloyloxy ethyl) acid phosphate. These may be used singly, or two or more may be mixed for use. The polymer modified with the unsaturated vinyl group other than olefins can be prepared using the monomer having an unsaturated vinyl group other than olefins.

In the case that the resins (A-1), (A-3) and (A-5) are grouped as the (A-1) type resin and the resins (A-2), (A-4) and (A-6) are grouped as the (A-2) type resin, the resin (A) may be the (A-1) type resin alone or a mixture of the (A-1) type resin and (A-2) type resin. Furthermore, the (A-1) type resin may be the resin (A-3), the resin (A-5), a mixture of the resins (A-1) and (A-3), a mixture of the resins (A-1) and (A-5), a mixture of the resins (A-3) and (A-5) or a mixture of the resins (A-1), (A-3) and (A-5). The (A-2) type resin may be the resin (A-4), the resin (A-6),a mixture of the resins (A-2) and (A-4), a mixture of the resins (A-2) and (A-6), a mixture of the resins (A-4) and (A-6), or a mixture of the resins (A-2),(A-4) and (A-6). In the combined use of the (A-1) type resin and the (A-2) type resin, the proportion of the (A-1) type resin and the (A-2) type resin is preferably 100 : 0 to 30: 70, more preferably 100:0 to 35:65 from the viewpoints that the dispersibility with fibers at the time of molding and the physical properties of a molded material are improved, integrity and flexibility of fibers are improved in the use for sizing agents and the mechanical strength of a molded material is improved.

[(B) Second propylene resin]

The second propylene resin (B) used in the present invention is a propylene resin at least containing a carboxylic acid salt bonded to a polymer chain and contains a group represented by the following formula (1)

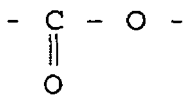

... (1)

in a concentration of 0.05 to 5 mmol equivalent weight per 1 gram of the resin.

The propylene resin (B) can be prepared by graft polymerizing a copolymer of propylene and an α-olefin or two or more α-olefins, typified by polypropylene, ethylene/propylene copolymer, propylene/1-butene copolymer or ethylene/propylene/1-butene copolymer, on a monomer having neutralized or un-neutralized carboxylic acid and/or a monomer having a saponified or un-saponified carboxylic acid ester.

Examples of the monomer having neutralized or un-neutralized carboxylic acid group and the monomer having a saponified or un-saponified carboxylic acid ester group are ethylene unsaturated carboxylic acids, their anhydrides and their esters.

Per 1 gram of the resin (B), the total amount of the group represented by the formula (1),

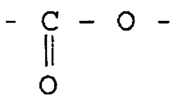

... (1)

is 0.05 to 5 mmol equivalent weight, preferably 0.1 to 4 mmol equivalent weight, more preferably 0.3 to 3 mmol equivalent weight.

Examples of ethylene unsaturated carboxylic acid are (meth)acrylic acid, maleic acid, fumaric acid, tetrahydrophthalic acid, itaconic acid, citraconic acid, crotonic acid and isocrotonic acid; examples of their anhydrides are Nadic acid™ (endocis-bicyclo[2.2.1]hepto-5-ene-2,3 dicarboxylic acid),maleic anhydride and citraconic anhydride;
and examples of unsaturated carboxylic acid esters are methyl, ethyl or propyl monoesters or diesters of the ethylene unsaturated carboxylic acids. These monomers may be used singly or two or more may be used simultaneously. Among them, acid anhydrides are preferable and further maleic anhydride is more preferable.

The resin (B) can be prepared by neutralizing or saponificating the raw materials of the resin (B) in the preparation of the aqueous dispersion. The resin (B) can be prepared by the same method as that of the component (A-3).

The resin (B) used in the present invention has a weight average molecular weight Mw of not less than 1,000 and less than 50,000, preferably not less than 1,200 and less than 48,000, and has a constituting unit derived from propylene of usually 50 to 100 % by mole, preferably 70 to 100 % by mole, more preferably 85 to 100 % by mole from the viewpoint of compatibility with the first propylene resin (A). These propylene resins may be used singly or two or

more may be used simultaneously, and furthermore, the propylene resins having different Mw may be used together. The above Mw range of the propylene resin (B) is the optimum range in order that the resin (B) easily moves to the fiber surface at the time of molding and interlocking between the resin (A) and the molecules can caused.

The weight average molecular weight Mw (b) of the resin (B) is different from the weight average molecular weight Mw(a) of the resin (A) and the Mw(a) is larger than the Mw(b).

The propylene resin (B) may be a propylene resin (B-1) containing a polymer modified with an unsaturated vinyl group other than olefins. The content of the polymer modified with an unsaturated vinyl group other than olefins is preferably 0.1 to 50 parts by weight based on 100 parts by weight of the propylene resin (B-1). The resin (B-1) can be prepared by the same method as that of the resin (A-5).

[(C) Anionic and/or nonionic surfactant]

As the anionic surfactants and the nonionic surfactants used in the present invention, known ones are used without limitation.

As the anion surfactant, it is possible to use known ones. Examples thereof are primary higher fatty acid salts, secondary higher fatty acid salts, primary higher alcohol sulfate ester salts, secondary higher alcohol sulfate ester salts, primary higher alkyl sulfonates, secondary higher alkyl sulfonates, higher alkyl disulfonates, sulfonated higher fatty acid salts, higher fatty acid sulfate ester salts, higher fatty acid sulfate acid ester sulfonates, higher alcohol ether sulfuric acid salts, higher alcohol ether sulfonates, higher aliphatic acid amide alkyloled sulfuric acid ester salts, alkyl benzene sulfonate, alkyl phenol sulfonates, alkyl naphthaline sulfonates and alkyl benzoimidazole sulfonates.

Among these anion surfactants, higher fatty acid salts are preferable and particularly, saturated or unsaturated higher fatty acid alkali metal salts having 10 to 20 carbon atoms are more preferable. Specific examples thereof are saturated fatty acids such as capric acid, undecanoic acid, lauric acid, myristic acid, palmitic acid, margaric acid, stearic acid and arachic acid; unsaturated fatty acids such as lindene acid, tuzuic acid, petroselinic acid, oleic acid, linolic acid, linolenic acid, arachidonic acid; and their alkali metal salts and their mixtures.

As the nonion surfactant, it is possible to use known ones. Examples thereof are polyoxyethylene alkylether, polyoxyethylene alkylphenylether, polyoxyethylene fatty acid ester, polyoxyethylene fatty acid amide ether, polyvalent alcohol fatty acid ester, polyoxyethylene polyvalent alcohol fatty acid ester, fatty acid sucrose ester, alkylol amide and polyoxyalkylene block copolymer.

As the surfactant, the anion surfactants and the nonion surfactants can be used singly or two or more may be used simultaneously.

[Process for producing the aqueous dispersion for fiber treatment]

In the process for producing the aqueous dispersion for fiber treatment according to the present invention, the processes for dispersing the resins (A) to (C) in water are disclosed in, for example, JP-B-H7(1995)-008933, JP-B-H7 (1995)-096647 and JP-B-H5(1993)-039975.

Examples of the basic substance used for neutralization and saponification in the production of the aqueous dispersion are alkali metal and/or alkali earth metals and/or other metals such as sodium, potassium, lithium, calcium, magnesium and zinc; inorganic amines such as hydroxyl amine and ammonium hydroxide; organic amines such as ammonium, (tri)methylamine, (tri) ethanol amine, (tri)ethylamine, dimethyl ethanol amine and morpholine; sodium oxides; sodium peroxides; oxides of an alkali metal and/or an alkali earth metal and/or other metals; hydroxides; hydrides; and weak acid salts of an alkali metal and/or an alkali earth metal and/or other metals such as sodium carbonates.

Preferable examples of the carboxylic acid group or carboxylic acid ester groups neutralized or saponified with the basic substance are carboxylic acid alkali metal salts such as sodium carboxylate and potassium carboxylate, or ammonium carboxylate.

The degree of the neutralization or saponification is usually 50 to 100%, preferably 70 to 100%, more preferably 85 to 100% from the viewpoints of the stability of the aqueous dispersion and the adhesion with fibers.

The aqueous dispersion for fiber treatment thus prepared according to the present invention, if necessary, can contain colorant component; examples are organic pigments such as azo pigments and phthalocyanine blue; dyes such as azo dyes and anthraquinone dyes; inorganic chemicals for sizing agent resins such as aluminum oxide, calcium carbonate, calcium hydroxide, magnesium hydroxide, silica and barium titanate; and inorganic pigments for colorants such as titanium oxide, molybdenum and carbon black.

The aqueous dispersion for fiber treatment thus prepared according to the present invention can further contain various stabilizers such as antioxidants, weathering stabilizers and heat resistant stabilizers, and defoaming agents, thickeners, dispersing agents, surfactants, mildew proofing agents, antibacterial agents, antiseptics, catalysts, fillers, waxes, anti-blocking agents, plasticizers and leveling agents. Particularly, in the case of including the step in need of heating during the fiber treatment of the aqueous dispersion of the present invention, or in the case of including the step

in need of heating during the molding of the aqueous dispersion after the fiber treatment, it is preferred to use the antioxidants and heat resistant stabilizers. From the viewpoints of processability and long-term stability, it is particularly preferred to use a phenol antioxidant and a phosphorous processing stabilizer simultaneously. The amount thereof is preferably not more than 5%, more preferably not more than 2% based on the amount of the resin.

The aqueous dispersion for fiber treatment according to the present invention can be used as a fiber treating agent, for example, it is blended with a fiber reinforces resin and can be used for integrity of fibers.

There is particularly no limitation on the kinds of fibers, which can be treated by a fiber treating agent that comprises the aqueous dispersion according to the present invention. The aqueous dispersion can be used for various inorganic fibers conventionally known as resin reinforcing materials, for example, glass fibers, carbon fibers, alumina fibers, ceramic fibers, rock fibers, slag fibers and metal fibers. Among the inorganic fibers, carbon fibers and glass fibers are preferable.

The carbon fibers have a surface oxygen concentration ratio [O/C] of oxygen (O) to carbon (C) in the fiber surface, as measured by an X ray photoelectron spectroscopy, of preferably 0.05 to 0.5, more preferably 0.08 to 0.4, more preferably 0.1 to 0.3. When the surface oxygen concentration ratio is not less than 0.05, the amount of the function groups on the carbon fiber surface can be secured and thereby it is possible to attain more firm adhesion with a thermoplastic resin. There is particularly no limitation on the upper limit of the surface oxygen concentration ratio. From the viewpoint of a balance between handling properties and productivity of the carbon fibers, the surface oxygen concentration ratio of not more than 0.5 is generally exemplified.

The surface oxygen concentration ratio of the carbon fibers can be determined by the following procedure by an X ray photoelectron spectroscopy. At first, a sizing agent, which is adhered on the carbon fiber surface, is removed from a carbon fiber bundle by the solvent and the carbon fiber bundle was cut into 20 mm and placed and spread on a copper specimen holder. Thereafter, the inside of a specimen chamber is kept at 1 x $10^8$ Torr using AlK$\alpha$ 1,2 as an X ray source. As the correcting value of a peak accompanied with electrification at the measuring time, a kinetic energy value (K.E.) of the main peak of $C_{1s}$ is set to be 1202 eV. The $C_{1s}$ peak area is determined by drawing a straight base line in the range of 1191 to 1205 eV as K.E. The $O_{1s}$ peak area is determined by drawing a straight base line in the range of 947 to 959 eV as K.E.

Herein, the surface oxygen concentration ratio is determined from the ratio of the $O_{1s}$ peak area and the $C_{1s}$ peak area using the correction value of the sensitivity inherent in the device as a ratio of atomic number. As the X ray photoelectron spectrometer, Model ES-200 manufactured by Kokusai electric Inc is used and the sensitivity correcting value is 1.74.

For a means of controlling the surface oxygen concentration ratio [O/C] in the range of 0.05 to 0.5, there is particularly no limitation. For example, it is possible to employ electrolytic oxidation treatment, oxidation treatment with a chemical solution and gas phase oxidation treatment. Among them, the electrolytic oxidation treatment is preferable.

The reinforcement fibers have an average fiber diameter, which is not particularly limited, of preferably 1 to 20 $\mu$m, more preferably 3 to 15 $\mu$m, from the viewpoints of the mechanical properties and the surface appearance of a resulting molded article. The reinforcement fiber bundle usable in the present invention has a mono-filament number, which is not particularly limited, of 100 to 350,000, preferably 1,000 to 250,000. From the viewpoint of the productivity of the reinforcement fibers, the bundle having many filaments is preferable, and the bundle having 20,000 to 100,000 filaments is preferably used.

Moreover, the aqueous dispersion can be used as a sizing agent for various other fibers such as polyolefin fibers, nylon fibers, vinylon fibers, acryl fibers, polyester fibers and polyurethane fibers. Among the above fibers, polyolefin fibers are preferable, and specific examples thereof are ethylene fibers and propylene fibers.

As the process for treating fibers with the above fiber treating agents, there is a process of adhering the treating agent on fibers by a method such as immersing method, spraying method or roller coating method and drying at a temperature 50 to 300°C for a period of time of 1 min to 10 hr. However, this process is not limited. The amount of the treating agent adhered is 0.1 to 40 % by weight, preferably 0.3 to 37 % by weight, more preferably 0.5 to 35 % by weight from the viewpoint that the fibers are easily dispersed.

The filaments forming the reinforcement fiber bundle of the present invention, at least 60 % of the surface of the mono-filament is preferably covered with the mixture of the first propylene resin and the second propylene resin. The un-covered part cannot exhibit adhesion properties and becomes a starting point of delamination to decrease the adhesion properties. Each mono-filament has a covered surface of preferably not less than 70%, more preferably not less than 80%. The covered condition of each mono-filament can be observed by a procedure of tracing a metal element of a carboxylic acid salt by a scanning electron microscope (SEM) or element analysis on the fiber surface.

In order that the handling properties and the quality of the reinforcement fiber bundle are favorable, the reinforcement fiber bundle of the present invention has a number of fluffs caused by friction, as measured by a method of evaluating fluffs caused by friction of not more than 10 per 1 m, more preferably not more than 8, furthermore preferably not more than 5. The method of evaluating the fluffs caused by friction is described below. A bobbin of the reinforcement fiber bundle is allowed to stand for 30 min or more in a temperature controlled room regulated at a temperature of 23±5°C

at a relative humidity of 60±20%. Next, the reinforcement fiber bundle is set to a creel 1 with a built in powder crutch using a device of causing fluffs with friction in the temperature controlled room regulated at the above temperature and the above humidity in accordance with the fiber passage chart as shown in Fig. 1 to make a fiber passage. At first, in order to cause fluffs with friction, the reinforcement fiber bundle is put on four fixed friction pins 2 having a diameter of 10 mm and a mirror processed surface and passed through a fluff counter 3. In the fluff counter, lamplight is irradiated on a traveling fiber, and the number of fluffs is detected by a phototransistor in an irradiated light condensed condition by a lens. With respect to the detection accuracy in the reinforcement fibers, fluffs having a fiber length of not less than 2 mm and a mono-filament diameter of not less than 3 μm can be detected. In order to cause slipping during the fiber traveling, the reinforcement fiber bundle is rolled up 5 or more times to a driving roller 4 and wound to a winder 5. The fiber rate is set to be 3 m/min and the traveling of the reinforcement fiber bundle is started in the fiber passage through a roller 6 as shown in Fig. 1. It is confirmed that the fiber passage operates smoothly and then the initial tension is regulated by a powder crouch so that the tension of the reinforcement fiber bundle during the running, as measured between the fluff counter 3 and the driving roller 4, is 6 gf/tex. Thereafter, the evaluation on fluffs of each sample caused by friction during running for 1 min is repeated three times by operating the fluff counter. The numbers of fluffs counted for 1 min on each fiber are taken as X1, X2 and X3 and the number of fluffs X (number/m) is determined from the following formula.

$$X = (X1 + X2 + X3) / 9$$

The small number of fluffs means low fluffing of the reinforcement fiber bundle and the reinforcement fiber bundle tends to be favorable.

In the case of using the fiber treating agent as a reinforcing agent for the resin, examples of the matrix resin are polyolefins such as polyethylene and polypropylene; thermoplastic resins such as nylon, polyester, polycarbonate, polyphenylene sulfide resin, polyacetal, polyimide, polyether ether ketone, polyvinylchloride, acryl resin, cellulose resin, polystyrene, acrylonitrile/styrene copolymer and acrylonitrile/styrene/butadiene copolymer; and thermosetting resins such as phenol resin, epoxy resin, unsaturated polyester, diallyl phthalate resin, urethane resin, melamine resin and urea resin. The fiber treating agent of the present invention is particularly preferably used in the case that the matrix resin is propylene resin.

The fiber treated with the above fiber treating agent is blended in an amount of usually 2 to 70 parts by weight, preferably 3 to 50 parts by weight based on 100 parts by weight of the matrix resin.

The fiber treated with the above fiber-treating agent can be also blended with cement materials such as Portland cement and alumina cement; and ceramic materials such as $Al_2O_3$, $SiO_2$, $B_4C$, $TiB_2$ and ZnBr.

The fiber-treating agent has excellent sizing properties of fibers and can improve the adhesion between fibers and the matrix resin, and further high physical properties can be exhibited because the fibers are dispersed in the matrix resin uniformly.

## EXAMPLE

Next, the present invention will be described with reference to the following examples in more detail, but they should not limit it.

### [1. Method of evaluating treated carbon fiber material]

For the treated carbon fiber material, the adhered amount, the proportion of covering the fiber surface, the number of fluffs caused by friction and the interfacial shearing strength were evaluated as follows.

<Adhered amount of treated carbon fiber material>

About 5 gram of a reinforcement fiber bundle having a propylene resin adhered surface was taken and dried at 120 °C for 3 hr. The weight W1 (g) was measured. Next, the reinforcement fiber bundle was heated at a nitrogen atmosphere at 450 °C for 15 min and cooled to room temperature, and then the weight W2 (g) was measured. The adhered amount was determined by the following formula.

$$Adhered\ amount\ (\%) = (W1 - W2) / W2 \times 100$$

<Proportion of covering carbon fiber surface>

The reinforcement fiber bundle having a propylene resin adhered was observed with a scanning electron microscope and the proportion of covering the fiber surface was determined by the area ratio of the part covered with the resin to the part where the reinforcement fiber surface was exposed. The observation was carried out on optional 5 points concerning the part where the length was 10 times as much as the diameter of a mono-filament of the reinforcement fiber bundle. Five filaments were selected optionally and each single fiber was observed on 5 points. The total 25 points were observed to determine the average of the proportion of covering the fiber surface. The proportion of not less than 90% was taken as A, that of not less than 70% and less than 90% was taken as B, that of not less than 40% and less than 70% was taken as C and that of less than 40% was taken as D.

The proportion of covering the fiber surface

= Part of the resin covered / (Part of the resin covered + Part of exposed fiber surface)

<Number of fluffs caused by friction>

The reinforcement fiber bundle having a propylene resin adhered surface was allowed to stand in a temperature controlled room at a temperature of 23±5°C at a humidity of 60±20% for at least 30 min. Next, the reinforcement fiber bundle was set to a creel 1 with a built in powder crutch using a device of causing fluffs with friction in the temperature controlled room regulated at the above temperature and the above humidity in accordance with the fiber passage chart as shown in Fig. 1 to make a fiber passage. At first, in order to cause fluffs with friction, the reinforcement fiber bundle was put on four fixed friction pins 2 having a diameter of 10 mm and a mirror processed surface and passed through a fluff counter 3. In order to cause slipping during the traveling, the reinforcement fiber bundle was rolled up 5 or more times to a driving roller 4 and wound to a winder 5. The fiber rate was set to be 3 m/min and the traveling of the reinforcement fiber bundle was started in the fiber passage through a roller 6 as shown in Fig. 1. It was confirmed that the fiber passage operated smoothly and then the initial tension was regulated by a powder crouch so that the tension of the reinforcement fiber bundle during the running, measured between the fluff counter 3 and the driving roller 4, was 6 gf/tex.

Thereafter, the evaluation on fluffs of each sample caused by friction during running for 1 min was repeated three times by operating the fluff counter. The numbers of fluffs counted for 1 min on each sample were taken as X1, X2 and X3 and the number of fluffs X (number/m) was determined from the following formula. The number of 0 to 2 fluffs/m was taken as A, the number of 3 to 5 fluffs/m was takes as B, the number of 6 to 10 fluffs/m was taken as C and the number of 11 or more fluffs/m was taken as D. A, B and C were considered to be acceptable.

$$X = (X1 + X2 + X3) / 9$$

<Interfacial shear strength>

From the reinforcement fiber bundle having a propylene resin adhered surface, one mono-filament having a 20 cm length was taken out. Successively, two resin films having a thickness of 150 μm and a size of 20 cm x 20 cm square which comprises 50 % by weight of an unmodified propylene resin (Trade Name: Prime polypro J105G, manufactured by prime polymer Co., Ltd) and 50 % by weight of an acid modified propylene resin (Trade Name: Admer QB850 manufactured by Mitsui Chemicals Inc.) were prepared. The mono-filament taken out was put on one resin film linearly. The other film was put on the mono-filament so that the mono-filament was sandwiched with the two resin films. They

were pressed at a pressure of 0.5 MPa at 200°C for 30 min to prepare a sample such that the mono-filament was embedded in the resins. The resultant sample was cut to prepare a specimen having a thickness of 0.2 mm, width of 10 mm and a length of 70 mm having the mono-filament embedded in the center. Ten specimens were prepared in the above manner.

Using usual tensile test jigs, this specimen was set to be a test length of 25 mm and measured at a strain rate of 0.5 mm/min. When the rupture of the reinforcement fiber was not caused, the average length of broken fibers (1) was determined by measurement with a transmission microscope.

The interfacial shear strength (τ) (MPa) was determined by the following formula.

$$\tau = (\sigma f \cdot d) / 2lc, \quad lc = (4/3) \cdot 1$$

Herein, 1 is an average of the final length of the ruptured fiber, of is a tensile strength of the fiber (MPa) and d is a diameter of the fiber (μm). σf was determined by the following method according to the rule that the tensile strength distribution of the reinforcement fiber conforms to the Weibull distribution. That is, using the mono-filament, the relationship of the specimen length and average tensile strength was determined from the average tensile strengths obtained by the specimen lengths of 5, 25 and 50 mm with the least-squares method and thereby the average tensile strength at the time of the specimen length of 1c was determined.

With regard to the result of the interfacial shear strength, the surface shear strength of not less than 16 MPa was taken as A, that of not less than 14 MPa and less than 16 MPa was taken as B, that of not less than 12 MPa and less than 14 MPa was taken as BC, that of not less than 10 MPa and less than 12 MPa was taken as C and that of less than 10 MPa was taken as D.

The evaluation details were referred to the following document.

Drzal, L.T., Mater. Sci. Eng. A126, 289 (1990)

Example 1

(1) Preparation of Aqueous dispersion

91 Parts by weight of the propylene/butene/ethylene copolymer (A-1) (having a constituting unit derived from propylene, hereinafter sometimes referred to "C3", of 66 % by mole, a weight average molecular weight, hereinafter sometimes referred to "Mw", of 90, 000 and a melt index at 230°C, hereinafter sometimes referred to "MI", of 700 as the propylene resin (A), 9 parts by weight of a maleic anhydride modified propylene/ethylene copolymer (having C3 of 98 % by mole, Mw of 25,000 and an acid content of 0.81 mmol) as the raw material of the propylene resin (B) and 3 parts by weight of potassium oleate as the surfactant (C) were mixed. The mixture was introduced into a pressure type kneader and melt-kneaded at 180°C for 30 min. To the kneader, a 20% potassium hydroxide aqueous solution was put in an amount such that all carboxylic acids could be neutralized, and melt kneaded for 30 min. This kneadate was taken out, put into warm water and stirred sufficiently to prepare an aqueous dispersion. The obtained aqueous dispersion had a solid component concentration of 45%, pH of 12 and an average particle diameter (measured by micro track) of 0.4 μm.

The maleic anhydride modified propylene/ethylene copolymer (having C3 of 98 % by mole, Mw of 25,000 and an acid content of 0.81 mmol) was prepared by mixing 96 parts by weight of a propylene/ethylene/copolymer and 4 parts by weight of maleic anhydride and 0.4 part by weight of PERHEXYNE 25B (manufactured by NOF CO.) as a polymerization initiator and modifying with heating at 160°C for 2 hr.

(2) Preparation of specimen and evaluation

A copolymer, which comprises polyacrylonitrile as a main component, was subjected to spinning, burning treatment and surface acidification treatment to prepare a continuous carbon fiber of the 24,000 filaments in total. This continuous carbon fiber had the properties as follows.

Filament diameter: 7 μm
Mass per unit length: 1.6 g/m
Specific gravity: 1.8
Surface oxygen concentration ratio [O/C]: 0.06
Tensile strength: 4600 MPa
Tensile elastic modulus: 220 GPa
The surface oxygen concentration ratio was determined using the carbon fiber prepared after the surface oxidation

treatment by an X ray photoelectron spectroscopy in the following procedure. At first, the carbon fiber bundle was cut into a length of 20 mm and put and spread on a copper specimen supporting plate. The inside of a specimen chamber was kept at 1 x $10^8$ Torr and AlKal, 2 was used as an X ray source. As a corrected value of a peak accompanied with electrification at the time of measuring, a kinetic energy value (K.E.) of a main peak of $C_{1s}$ was set to 1,202 eV. The $C_{1s}$ peak area was determined by drawing a straight base line in the range of 1,191 to 1,205 eV as K.E. The $O_{1s}$ peak area was determined by drawing a straight base line in the range of 947 to 959 eV as K.E. It was calculated as an atomic ratio from the ratio of the $O_{1s}$ peak area and the $C_{1s}$ peak area using the sensitivity corrected value inherent in the device. As a device of X ray photoelectron spectroscopy, Model ES-200 manufactured by Kokusai Electric Inc was used and the sensitivity corrected value was 1.74.

The aqueous dispersion prepared in (1) of Example 1 was regulated to have a solid component concentration of 6% and adhered on this continuous carbon fiber bundle by a roller impregnation method and dried at 210°C for 2 min on the line to remove moisture and thereby a specimen was prepared. The specimen was evaluated by the method as described in [1. evaluation method of the treated carbon fiber material]. The results are shown in Table 1. The amount of the resin adhered was 3%.

Example 2

(1) Preparation of aqueous dispersion

91 Parts by weight of a propylene/butane/ethylene copolymer (A-1) (having C3 of 66 % by mole, Mw of 90,000 and MI of 700) as the propylene resin (A), 9 parts by weight of a maleic anhydride modified propylene/ethylene copolymer (having C3 of 98 % by mole, Mw of 25,000 and an acid content of 0.81 mmol) as a material of the propylene resin (B) and 3 parts by weight of potassium oleate as the surfactant (C) were mixed. This mixture was fed at a rate of 3,000 g/hr from a hopper of a twin screw extruder (PCM-30, L/D of 40, manufactured by Ikegai Tekko Inc., and further a 20% potassium hydroxide aqueous solution was continuously fed at a rate of 90 g/hr from a port provided on a vent part of the extruder, and were extruded continuously at a heating temperature of 210 ° C. The resin mixture extruded was cooled to 110° C by a static mixer equipped with a jacket provided on the port of the extruder and was injected into warm water at 80°C to prepare an aqueous dispersion. The resulting aqueous dispersion had a yield of 99%, a solid component concentration of 45%, pH of 12 and an average particle diameter of 0.4 μm (measured by micro track).

The maleic anhydride modified propylene/ethylene copolymer (having C3 of 98 % by mole, Mw of 25,000 and an acid content of 0.81 mmol) was prepared by mixing 96 parts by weight of a propylene/ethylene copolymer, 4 parts by weight of maleic anhydride and 0.4 part by weight of PERHEXYNE (manufactured by NOF CO.) as a polymerization initiator and modifying at a heating temperature of 160°C for 2 hr.

(2) Preparation of specimen and evaluation

Using the resulting aqueous dispersion, a specimen was prepared by the method as described in (2) of Example 1, and evaluated by the method as described in [1. method of evaluating the treated carbon fiber material]. The results are shown in Table 1.

Example 3

An aqueous dispersion was prepared in the same method as that in Example 2 except for using a propylene/ethylene copolymer (having C3 of 70 % by mole, Mw of 130,000 and MI of 80) as the propylene resin (A-1). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 4

An aqueous dispersion was prepared in the same method as that in Example 2 except for using a propylene/ethylene copolymer (having C3 of 95 % by mole, Mw of 130,000 and MI of 200) as the propylene resin (A-1). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results

are shown in Table 1.

Example 5

An aqueous dispersion was prepared in the same method as that in Example 2 except for using a propylene/ethylene copolymer (having C3 of 70 % by mole, Mw of 60,000 and MI of 800) as the propylene resin (A-1). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 6

An aqueous dispersion was prepared in the same method as that in Example 2 except for using a maleic anhydride modified propylene/ethylene copolymer (having C3 of 95 % by mole, Mw of 40,000 and an acid content of 0.81 mmol) as the propylene resin (B) . The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 7

An aqueous dispersion was prepared in the same method as that in Example 2 except for using a maleic anhydride modified propylene/ethylene copolymer (having C3 of 98 % by mole, Mw of 10,000 and an acid content of 0.81 mmol) as the propylene resin (B) . The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 8

An aqueous dispersion was prepared in the same method as that in Example 2 except for using a maleic anhydride modified propylene/ethylene copolymer (having C3 of 98 % by mole, Mw of 5,000 and an acid content of 0.81 mmol) as the propylene resin (B) . The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 9

An aqueous dispersion was prepared in the same method as that in Example 2 except for using a maleic anhydride modified propylene/ethylene copolymer (having C3 of 87 % by mole, Mw of 20,000 and an acid content of 0.81 mmol) as the propylene resin (B) . The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 10

An aqueous dispersion was prepared in the same method as that in Example 2 except for using a maleic anhydride modified propylene/ethylene copolymer (having C3 of 98 % by mole, Mw of 25,000 and an acid content of 1.02 mmol) as the propylene resin (B). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The maleic anhydride modified propylene/ethylene copolymer (having C3 of 98 % by mole, Mw of 25,000 and an acid content of 1.02 mmol) was prepared by mixing 96 parts by weight of a propylene/ethylene copolymer, 5 parts by weight of maleic anhydride and 0.5 part by weight of PERHEXYNE 25B (manufactured by NOF CO.) as a polymerization initiator and modifying at a heating temperature of 160°C for 2 hr.

Example 11

An aqueous dispersion was prepared in the same method as that in Example 2 except for using a methacrylic acid modified propylene/ethylene copolymer (having C3 of 98 % by mole, Mw of 25,000 and an acid content of 0.93 mmol) as the propylene resin (B). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The methacrylic acid modified propylene/ethylene copolymer (having C3 of 98 % by mole, Mw of 25,000 and an acid content of 0.93 mmol) was prepared by mixing 92 parts by weight of a propylene/ethylene copolymer, 8 parts by weight of methacrylic acid and 0.6 part by weight of PERHEXYNE 25B (manufactured by NOF CO.) as a polymerization initiator and modifying at a heating temperature of 160°C for 2 hr.

Example 12

An aqueous dispersion was prepared in the same method as that in Example 2 except that the amount of the propylene/butane/ethylene copolymer is changed to 70 parts by weight from 91 parts by weight and the amount of the maleic anhydride modified propylene/ethylene copolymer is changed to 30 parts by weight from 9 parts by weight. The resulting aqueous dispersion had a yield of 99%, a solid component concentration of 45%, pH of 12 and an average particle diameter of 0.3 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 13

An aqueous dispersion was prepared in the same method as that in Example 2 except that the amount of the propylene/butane/ethylene copolymer is changed to 85 parts by weight from 91 parts by weight and the amount of the maleic anhydride modified propylene/ethylene copolymer is changed to 15 parts by weight from 9 parts by weight. The resulting aqueous dispersion had a yield of 99%, a solid component concentration of 45%, pH of 12 and an average particle diameter of 0.3 μm (measured by micro track).

Using the resulting aqueous dispersion, a specimen was prepared by the method as described in (2) of Example 1, and evaluated by the method as described in [1. Method of evaluating the treated carbon fiber material]. The results are shown in Table 1.

Example 14

An aqueous dispersion was prepared in the same method as that in Example 2 except that the amount of the propylene/butane/ethylene copolymer is changed to 95 parts by weight from 91 parts by weight and the amount of the maleic anhydride modified propylene/ethylene copolymer is changed to 5 parts by weight from 9 parts by weight. The resulting aqueous dispersion had a yield of 99%, a solid component concentration of 45%, pH of 12 and an average particle diameter of 0.5 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 15

An aqueous dispersion was prepared in the same method as that in Example 2 except that the amount of the

potassium oleate is changed to 10 parts by weight from 3 parts by weight. The resulting aqueous dispersion had a yield of 99%, a solid component concentration of 45%, pH of 12 and an average particle diameter of 0.3 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 16

An aqueous dispersion was prepared in the same method as that in Example 2 except for using a mixed resin of 45.5 parts by weight of the propylene/butene/ethylene copolymer (A-1) (having C3 of 66 % by mole, Mw of 90,000 and MI of 700) and 45.5 parts by weight of the propylene/butene copolymer (A-2) (having C3 of 81 % by mole, Mw of 300,000 and MI of 7) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 17

An aqueous dispersion was prepared in the same method as that in Example 2 except for using 90 parts by weight of a propylene/butene/ethylene copolymer (having C3 of 66 % by mole, Mw of 300,000 and MI of 7) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 18

An aqueous dispersion was prepared in the same method as that in Example 2 except that the 20% potassium hydroxide aqueous solution was changed to a mixed solution of a 20% potassium hydroxide aqueous solution and 20% aqueous ammonia in a weight ratio of 1:1 and the feeding amount was changed from 90 g/hr to 110 g/hr. The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 19

An aqueous dispersion was prepared in the same method as that in Example 2 except that the 20% potassium hydroxide aqueous solution was changed to a 20% sodium hydroxide aqueous solution and the feeding amount was changed from 90 g/hr to 70 g/hr. The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 20

An aqueous dispersion was prepared in the same method as that in Example 2 except that the 20% potassium hydroxide aqueous solution was changed to 20% aqueous ammonia and the feeding amount was changed from 90 g/hr to 150 g/hr. The resulting aqueous dispersion had a yield of 99%, a solid component concentration of 45%, pH of 12 and an average particle diameter of 0. 4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 21

An aqueous dispersion was prepared in the same method as that in Example 2 except that the 20% potassium hydroxide aqueous solution was changed to a 20% dimethylethanol amine aqueous solution and the feeding amount was changed from 90 g/hr to 120 g/hr. The resulting aqueous dispersion had a yield of 99%, a solid component concentration of 45%, pH of 12 and an average particle diameter of 0.4 μm (measured by micro track).
Using the resulting aqueous dispersion, a specimen was prepared by the method as described in (2) of Example 1, and evaluated by the method as described in [1. method of evaluating the treated carbon fiber material]. The results are shown in Table 1.

Example 22

An aqueous dispersion was prepared in the same method as that in Example 2 except that the feeding amount of the 20% potassium hydroxide aqueous solution was changed from 90 g/hr to 55 g/hr. The resulting aqueous dispersion had a yield of 99%, a solid component concentration of 45%, pH of 12 and an average particle diameter of 0.4 μm (measured by micro track).
Using the resulting aqueous dispersion, a specimen was prepared by the method as described in (2) of Example 1, and evaluated by the method as described in [1. method of evaluating the treated carbon fiber material]. The results are shown in Table 1.

Example 23

An aqueous dispersion was prepared in the same method as that in Example 2 except that the feeding amount of the 20% potassium hydroxide aqueous solution was changed from 90 g/hr to 43 g/hr. The resulting aqueous dispersion had a yield of 99%, a solid component concentration of 45%, pH of 12 and an average particle diameter of 0.6 μm (measured by micro track). The neutralization degree of total carboxylic acids was 70%.
Using the resulting aqueous dispersion, a specimen was prepared by the method as described in (2) of Example 1, and evaluated by the method as described in [1. method of evaluating the treated carbon fiber material]. The results are shown in Table 1.

Example 24

An aqueous dispersion was prepared in the same method as that in Example 2 except that the maleic anhydride modified propylene/ethylene copolymer was changed to a styrene/(meth)acrylate/ maleic anhydride modified propylene/ ethylene copolymer (having C3 of 95 % by mole, Mw of 25,000, a content of styrene/(meth)acrylate/ maleic anhydride of 10 % by weight and an acid content of 0.81 mmol). The resulting aqueous dispersion had a yield of 99%, a solid component concentration of 45%, pH of 12 and an average particle diameter of 0. 6 μm (measured by micro track).
Using the resulting aqueous dispersion, a specimen was prepared by the method as described in (2) of Example 1, and evaluated by the method as described in [1. method of evaluating the treated carbon fiber material]. The results are shown in Table 1.
The styrene/(meth)acrylate/maleic anhydride modified propylene/ ethylene copolymer (having C3 of 95 % by mole, Mw of 25,000, a content of styrene/(meth)acrylate/maleic anhydride of 10 % by weight and an acid content of 0.81 mmol) was prepared by mixing 96 parts by weight of a propylene/ethylene copolymer and, as a monomer having an unsaturated vinyl group, 4 parts by weight of maleic anhydride, 2 parts by weight of styrene and 4 parts by weight of ethylmethacrylate and, as a polymerization initiator, 0.5 part by weight of PERHEXYNE 25B (manufactured by NOF CO.), and then modifying at a heating temperature of 160°C for 2 hr.

Example 25

An aqueous dispersion was prepared in the same method as that in Example 2 except for using the maleic anhydride modified propylene/butene/ethylene copolymer (A-3) (having C3 of 66 % by mole, Mw of 70,000, MI of 750 and an acid content of 0.81 mmol) as the propylene resin (A). The resulting aqueous dispersion had a yield of 99%, a solid component concentration of 45%, pH of 12 and an average particle diameter of 0.3 μm (measured by micro track).
The maleic anhydride modified propylene/butene/ethylene copolymer (having C3 of 66 % by mole, Mw of 70,000, MI of 750 and an acid content of 0.81 mmol) was prepared by mixing 96 parts by weight of a propylene/butene/ ethylene copolymer, 4 parts by weight of maleic anhydride and 0.4 part by weight of PERHEXYNE 25B (manufactured by NOF CO.) as a polymerization initiator, and modifying at a heating temperature of 160° C for 2 hr.
Using the resulting aqueous dispersion, a specimen was prepared by the method as described in (2) of Example

1, and evaluated by the method as described in [1. method of evaluating the treated carbon fiber material]. The results are shown in Table 1.

Example 26

An aqueous dispersion was prepared in the same method as that in Example 2 except for using the styrene/(meth)acrylate/ maleic anhydride modified propylene/butene/ethylene copolymer (A-5) (having C3 of 66 % by mole, Mw of 70,000, MI of 800, a content of styrene/(meth) acrylate/maleic anhydride of 30 % by weight and an acid content of 0.81 mmol) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The styrene/(meth)acrylate/maleic anhydride modified propylene/butene/ethylene copolymer (having C3 of 66 % by mole, Mw of 70,000, MI of 800, a content of styrene/(meth)acrylate/ maleic anhydride of 30 % by weight and an acid content of 0.81 mmol) was prepared by mixing 70 parts by weight of a propylene/butene/ethylene copolymer and, as a monomer having an unsaturated vinyl group, 4 parts by weight of maleic anhydride, 5 parts by weight of styrene, 12 parts by weight of ethylmethacrylate and 9 parts by weight of methyl methacrylate and, as a polymerization initiator, 0.8 part by weight of PERHEXYNE 25B (manufactured by NOF CO.) and then modifying at a heating temperature of 140°C for 2 hr.

Example 27

An aqueous dispersion was prepared in the same method as that in Example 24 except that the composition of the monomer having an unsaturated vinyl group was changed to the composition which comprises 4 parts by weight of maleic anhydride, 2 parts by weight of styrene and 4 parts by weight of ethylmethacrylate, and the styrene/(meth) acrylate/maleic anhydride content of the styrene/(meth)acrylate/maleic anhydride modified propylene/butene/ethylene copolymer was changed to 10 % by weight (acid content of 0.81 mmol). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 28

An aqueous dispersion was prepared in the same method as that in Example 2 except for using a mixed resin of 45.5 parts by weight of the propylene/butene/ethylene copolymer (A-1) (having C3 of 66 % by mole, Mw of 90,000 and MI of 700) and 45.5 parts by weight of the styrene/(meth)acrylate/maleic anhydride modified propylene/butene/ethylene copolymer (A-5) (having C3 of 66 % by mole, Mw of 70,000, MI of 800, a content of the styrene/ (meth) acrylate/maleic anhydride of 10 % by weight and an acid content of 0.81 mmol) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Example 29

An aqueous dispersion was prepared in the same method as that in Example 2 except for using a mixed resin of 45.5 parts by weight of the maleic anhydride modified propylene/butene/ethylene copolymer (A-3) (having C3 of 66 % by mole, Mw of 70,000, MI of 750 and an acid content of 0.81 mmol) and 45.5 parts by weight of the maleic anhydride modified propylene/butene copolymer (A-4) (having C3 of 81 % by mole, Mw of 200,000, MI of 9 and a content of the maleic anhydride of 4 % by weight) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The maleic anhydride modified propylene/butene copolymer (A-4) (having C3 of 81 % by mole, Mw of 200,000, MI of 9 and a content of maleic anhydride of 4 % by weight) was prepared by mixing 96 parts by weight of the propylene/ butene copolymer described in Example 16, and 4 parts by weight of maleic anhydride and 0.4 part by weight of PERHEXYNE 25B (manufactured by NOF CO.) as a polymerization initiator and modifying at a heating temperature of 220°C at a rate of 16 kg/ hr using a twin screw extruder (PCM-30, L/D of 40 manufactured by Ikegai Tekko Inc.

Example 30

An aqueous dispersion was prepared in the same method as that in Example 2 except for using a mixed resin of 45.5 parts by weight of the styrene/(meth)acrylate/maleic anhydride modified propylene/butene/ethylene copolymer (A-5) (having C3 of 66 % by mole, Mw of 70,000, MI of 800, a content of styrene/ (meth) acrylate/maleic anhydride of 10 % by weight and an acid content of 0.81 mmol) and 45.5 parts by weight of the styrene/(meth)acrylate/maleic anhydride modified propylene/butene copolymer (A-6) (having C3 of 81 % by mole, Mw of 200,000, MI of 10 and a content of the styrene/(meth)acrylate maleic anhydride of 10 % by weight) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The styrene/(meth)acrylate/maleic anhydride modified propylene/butane copolymer (A-6) (having C3 of 81 % by mole, Mw of 200,000, MI of 10 and a content of styrene/(meth)acrylate/ maleic anhydride of 10 % by weight was prepared by mixing 90 parts by weight of the propylene/butene copolymer described in Example 16 and, as a monomer having an unsaturated vinyl group, 4 parts by weight of maleic anhydride, 2 parts by weight of styrene and 4 parts by weight of ethylmethacrylate and, as a polymerization initiator, 0.6 part by weight of PERHEXYNE 25B (manufactured by NOF CO.) and then modifying at a heating temperature of 220°C at a rate of 16 kg/ hr using a twin screw extruder (PCM-30, L/D of 40 manufactured by Ikegai Tekko Inc).

Example 31

An aqueous dispersion was prepared in the same method as that in Example 2 except for using a mixed resin of 45.5 parts by weight of the styrene/(meth)acrylate/maleic anhydride modified propylene/butene/ethylene copolymer (A-5) (having C3 of 66 % by mole, Mw of 70,000, MI of 800, a content of styrene/ (meth)acrylate/maleic anhydride of 30 % by weight and an acid content of 0.81 mmol) and 45.5 parts by weight of the styrene/(meth)acrylate/maleic anhydride modified propylene/butene copolymer (A-6) (having C3 of 81 % by mole, Mw of 200,000, MI of 10, a content of the styrene/(meth)acrylate maleic anhydride of 30 % by weight and an acid content of 0.81 mmol) as the propylene resin (A). The resulting aqueous dispersion had a yield of 99%, a solid component concentration of 45%, pH of 12 and an average particle diameter of 0.4 μm (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

The styrene/(meth)acrylate/maleic anhydride modified propylene/butene copolymer (A-6) (having C3 of 81 % by mole, Mw of 200,000, MI of 10, a content of styrene/ (meth) acrylate/maleic anhydride of 30 % by weight and an acid content of 0.81 mmol) was prepared by the following method. In 100 parts by weight of toluene, 12 parts by weight of maleic anhydride, 15 parts by weight of styrene, 36 parts by weight of ethylmethacrylate and 27 parts by weight of methylmethacrylate and, as a polymerization initiator, 0.5 part by weight of PERBUTYL O were solution polymerized and toluene was removed from the resin solution to prepare the styrene/(meth)acrylate/maleic anhydride copolymer. Next, 70 parts by weight of the propylene/butane copolymer described in Example 16 was mixed with 30 parts by weight of the styrene/(meth)acrylate/maleic anhydride copolymer and modified at a heating temperature of 220°C at a rate of 16 kg/ hr using a twin screw extruder (PCM-30, L/D of 40 manufactured by Ikegai Tekko Inc).

Example 32

An specimen was prepared by the method as described in (2) of Example 1 except that the amount of the propylene resin adhered on carbon fibers was 1.0 % by weight and the aqueous dispersion prepared in Example 2 was used, and evaluated by the method as described in [1. method of evaluating the treated carbon fiber material]. The results are shown in Table 1.

Example 33

An specimen was prepared by the method as described in (2) of Example 1 except that the amount of the propylene resin adhered on carbon fibers was 20 % by weight and the aqueous dispersion prepared in Example 2 was used, and evaluated by the method as described in [1. method of evaluating the treated carbon fiber material]. The results are shown in Table 1.

Example 34

The evaluation procedure of Example 2 was conducted except that the carbon fibers used for evaluation according to the method as described in [1. method of evaluating the treated carbon fiber material] was changed to the following continuous carbon fibers. The results are shown in Table 1.

A copolymer, which comprises polyacrylonitrile as a main component, was subjected to spinning, burning treatment and surface acidifying treatment to prepare a continuous carbon fiber having 24,000 filaments in total. This continuous carbon fiber has the following properties. The surface oxygen concentration ratio was determined by the method as described in Example 1.

Filament fiber diameter: 7 μm
Mass per unit length: 1.6 g/m
Specific gravity: 1.8
Surface oxygen concentration ratio [O/C]: 0.12
Tensile strength: 4600 MPa
Tensile elastic modulus: 220 GPa

[2. Evaluation method for glass fiber containing molded material]

<Appearance of molded material>

The dispersion condition of glass fibers was evaluated visually. When the dispersion condition was good, it was evaluated as A, and when fiber bundles were observed, it was evaluated as D.

<Physical properties of molded material>

(i) Tensile strength:

The tensile strength was evaluated in accordance with the method of ASTM D638.

When the molded material has a tensile strength of not less than 130 MPa, it was taken as A, when it has a tensile strength of not less than 100 MPa and less than 130 MPa, it was taken as B, when it has a tensile strength of not less than 70 MPa and less than 100 MPa, it was taken as C, and when it has a tensile strength of less than 70 MPa, it was taken as D.

Example 35

One % by weight of the aqueous dispersion prepared in Example 2 was added to a solid component of glass fibers having a 13 μm diameter and 1,000 mono-filaments were sized to prepare a strand. The strand was cut into a length of 3 mm to prepare chopped strands. 43 parts by weight of the resulting chopped strands and 100 parts by weight of polypropylene ([η] of 1.8 dl/g, a melting point of 160°C) were mixed, stirred by a tumbler mixer, and pelletized by a 40 mmØ extruder to prepare pellets. The pellets were subjected to injection molding to prepare a specimen for the physical property evaluation. The physical property evaluation test of the specimen was carried out by the method as described in [2. evaluation method for glass fiber containing molded material]. The results are shown in Table 1.

Example 36

A specimen for the physical property evaluation was prepared by the method as described in Example 35 except for using the aqueous dispersion prepared in Example 16, and the physical property test was carried out. The results are shown in Table 1.

Example 37

A specimen for the physical property evaluation was prepared by the method as described in Example 35 except for using the aqueous dispersion prepared in Example 25, and the physical property test was carried out. The results are shown in Table 1.

Example 38

A specimen for the physical property evaluation was prepared by the method as described in Example 35 except for using the aqueous dispersion prepared in Example 26, and the physical property test was carried out. The results are shown in Table 1.

Example 39

A specimen for the physical property evaluation was prepared by the method as described in Example 35 except for using the aqueous dispersion prepared in Example 28, and the physical property test was carried out. The results are shown in Table 1.

[3. Evaluation method of polyolefin fiber containing molded material]

<Form of polyolefin nonwoven fabric>

Whether the fibril structure exists or not was evaluated by a microscope. The nonwoven fabric having the fibril structure remained was taken as A and that having the fibril structure broken was taken as D.

<Property of polyolefin nonwoven fabric>

When the both ends of a nonwoven fabric were pulled, it was evaluated on that paper powder generated or not. The nonwoven fabric having no generation of paper powder was taken as A and that having generation of paper powder was taken as D.

Example 40

80 Parts by weight of synthetic pulp SWP Y600 (manufactured by Mitsui Chemicals Inc.) and 20 parts by weight of natural pulp were made to a mat by a batch type tester and the mat was impregnated with the aqueous dispersion prepared in Example 2 in an amount such that the solid component amount was 15 parts by weight by spraying with a spray equipment. The thickness of the mat was regulated by a hot press at 100°C with a 1.5 mm spacer and thereby a polyolefin nonwoven fabric was prepared. The polyolefin nonwoven fabric was submitted to the physical property test by the method as described in [3 Evaluation method of polyolefin fiber containing molded material]. The results are shown in Table 1.

Example 41

A polyolefin nonwoven fabric was prepared in the method as described in Example 40 except for using the aqueous dispersion prepared in Example 16 and the physical property test was carried out. The results are shown in Table 1.

Example 42

A polyolefin nonwoven fabric was prepared in the method as described in Example 40 except for using the aqueous dispersion prepared in Example 25 and the physical property test was carried out. The results are shown in Table 1.

Example 43

A pol yolefin nonwoven fabric was prepared in the method as described in Example 40 except for using the aqueous dispersion prepared in Example 26 and the physical property test was carried out. The results are shown in Table 1.

Example 44

A polyolefin nonwoven fabric was prepared in the method as described in Example 40 except for using the aqueous dispersion prepared in Example 28 and the physical property test was carried out. The results are shown in Table 1.

Example 45

An aqueous dispersion was prepared in the same method as that in Example 2 except for using 90 parts by weight of the maleic anhydride modified propylene/butene/ethylene copolymer (A-4) (having C3 of 70 % by mole, Mw of 200,000, MI of 20 and an acid content of 0.81 mmol) as the propylene resin (A). The resulting aqueous dispersion had a yield of 99%, a solid component concentration of 45%, pH of 12 and an average particle diameter of 0.3 μm (measured by micro track).

The maleic anhydride modified propylene/butene/ethylene copolymer (having C3 of 70 % by mole, Mw of 200,000, MI of 20 and an acid content of 0.81 mmol) was prepared by mixing 96 parts by weight of a propylene/butane/ethylene copolymer, 4 parts by weight of maleic anhydride and 0.4 part by weight of PERHEXYNE 25B (manufactured by NOF CO.) as a polymerization initiator and modifying at a heating temperature of 160°C for 2 hr.

Using the resulting aqueous dispersion, a specimen was prepared by the method as described in (2) of Example 1, and evaluated by the method as described in [1. method of evaluating the treated carbon fiber material]. The results are shown in Table 1.

Example 46

75 Parts by weight of the maleic anhydride modified propylene/butane copolymer (A-4) (having C3 of 70 % by mole, Mw of 80,000, MI of 500 and an acid content of 0.2 mmol) as the propylene resin (A), 25 parts by weight of a maleic anhydride modified propylene/ethylene copolymer (having C3 of 98 % by mole, Mw of 25,000 and an acid content of 0.81 mmol) as a material of the propylene resin (B) and 7 parts by weight of potassium oleate as the surfactant (C) were mixed. This mixture was fed at a rate of 3,000 g/hr from a hopper of a twin screw extruder (PCM-30, L/D of 40, manufactured by Ikegai Tekko Inc.), and further a 15% potassium hydroxide aqueous solution was continuously fed at a rate of 250 g/hr from a port provided on a vent part of the extruder, and was extruded continuously at a heating temperature of 210°C. The resin mixture extruded was cooled to 110°C by a static mixer equipped with a jacket provided on the port of the extruder and was injected into warm water at 80°C to prepare an aqueous dispersion. The resulting aqueous dispersion had a yield of 99%, a solid component concentration of 35%, pH of 12 and an average particle diameter of 0.2 μm (measured by micro track).

The maleic anhydride modified propylene/butene copolymer (having C3 of 70 % by mole, Mw of 80,000, MI of 500 and an acid content of 0.2 mmol) was prepared by mixing 99 parts by weight of a propylene/butene copolymer, 1 part by weight of maleic anhydride and 0.3 part by weight of PERHEXYNE 25B (manufactured by NOF CO.) as the polymerization initiator and modifying at a heating temperature of 160°C for 2 hr.

Using the resulting aqueous dispersion, a specimen was prepared by the method as described in (2) of Example 1, and evaluated by the method as described in [1. method of evaluating the treated carbon fiber material]. The results are shown in Table 1.

Example 47

A specimen for the physical property evaluation was prepared by the method as described in Example 35 except for using the aqueous dispersion as described in Example 46, and evaluated by the method as described in [2. method of evaluating the glass fiber containing molded material]. The results are shown in Table 1.

Example 48

A polyolefin nonwoven fabric was prepared by the method as described in Example 40 except for using the aqueous dispersion as described in Example 46, and the physical property test was carried out by the method as described in [3. method of evaluating polyolefin fiber containing molded material]. The results are shown in Table 1.

Example 49

75 Parts by weight of the maleic anhydride modified propylene/butane/ethylene copolymer (A-4) (having C3 of 66 % by mole, Mw of 70,000, MI of 750 and an acid content of 0.2 mmol) as the propylene resin (A), 25 parts by weight

of a maleic anhydride modified propylene/ethylene copolymer (having C3 of 98 % by mole, Mw of 25,000 and an acid content of 0.81 mmol) as a material of the propylene resin (B) and 7 parts by weight of potassium oleate as the surfactant (C) were mixed. This mixture was fed at a rate of 3,000 g/hr from a hopper of a twin screw extruder (PCM-30, L/D of 40, manufactured by Ikegai Tekko Inc.), and further a 15% potassium hydroxide aqueous solution was continuously fed at a rate of 250 g/hr from a port provided on a vent part of the extruder, and was extruded continuously at a heating temperature of 210°C. The resin mixture extruded was cooled to 110°C by a static mixer equipped with a jacket provided on the port of the extruder and was injected into warm water at 80°C to prepare an aqueous dispersion. The resulting aqueous dispersion had a yield of 99%, a solid component concentration of 35%, pH of 12 and an average particle diameter of 0.2 $\mu$m (measured by micro track).

The maleic anhydride modified propylene/butene/ethylene copolymer (having C3 of 66 % by mole, Mw of 70,000, MI of 750 and an acid content of 0.2 mmol) was prepared by mixing 99 parts by weight of a propylene/butene/ethylene copolymer, 1 part by weight of maleic anhydride and 0.3 part by weight of PERHEXYNE 25B (manufactured by NOF CO.) as the polymerization initiator and modifying at a heating temperature of 160°C for 2 hr.

Using the resulting aqueous dispersion, a specimen was prepared by the method as described in (2) of Example 1, and evaluated by the method as described in [1. method of evaluating the treated carbon fiber material]. The results are shown in Table 1.

Example 50

A specimen for the physical property evaluation was prepared by the method as described in Example 35 except for using the aqueous dispersion as described in Example 49, and evaluated by the method as described in [2. method of evaluating the glass fiber containing molded material]. The results are shown in Table 1.

Example 51

A polyolefin nonwoven fabric was prepared by the method as described in Example 40 except for using the aqueous dispersion as described in Example 49, and the physical property test was carried out by the method as described in [3. method of evaluating polyolefin fiber containing molded material]. The results are shown in Table 1.

Example 52

75 Parts by weight of the styrene/(meth)acrylate/maleic anhydride modified propylene/butane/ethylene copolymer (A-5) (having C3 of 66 % by mole, Mw of 70,000, MI of 800, a content of styrene/ (meth) acrylate/maleic anhydride of 30 % by weight and an acid content of 0.81 mmol) as the propylene resin (A), 25 parts by weight of a maleic anhydride modified propylene/ethylene copolymer (having C3 of 98 % by mole, Mw of 25,000 and an acid content of 0.81 mmol) as a material of the propylene resin (B) and 7 parts by weight of potassium oleate as the surfactant (C) were mixed. This mixture was fed at a rate of 3,000 g/hr from a hopper of a twin screw extruder (PCM-30, L/D of 40, manufactured by Ikegai Tekko Inc.), and further a 15% potassium hydroxide aqueous solution was continuously fed at a rate of 250 g/hr from a port provided on a vent part of the extruder, and was extruded continuously at a heating temperature of 210°C. The resin mixture extruded was cooled to 110°C by a static mixer equipped with a jacket provided on the port of the extruder and was injected into warm water at 80°C to prepare an aqueous dispersion. The resulting aqueous dispersion had a yield of 99%, a solid component concentration of 35%, pH of 12 and an average particle diameter of 0.2 $\mu$m (measured by micro track).

The styrene/(meth)acrylate maleic anhydride modified propylene/butene/ethylene copolymer (having C3 of 66 % by mole, Mw of 70,000, MI of 800, a content of styrene/(meth)acrylate/ maleic anhydride of 30 % by weight and an acid content of 0.81 mmol) was prepared by mixing 70 parts by weight of a propylene/butene/ethylene copolymer and, as a monomer having an unsaturated vinyl group, 4 part by weight of maleic anhydride, 5 parts by weight of styrene, 12 parts by weight of ethylmethacrylate and 9 parts by weight of methyl methacrylate and, as a polymerization initiator, 0.8 part by weight of PERHEXYNE 25B (manufactured by NOF CO.) and then modifying at a heating temperature of 140°C for 2 hr.

Using the resulting aqueous dispersion, a specimen was prepared by the method as described in (2) of Example 1, and evaluated by the method as described in [1. method of evaluating the treated carbon fiber material]. The results are shown in Table 1.

Example 53

A specimen for the physical property evaluation was prepared by the method as described in Example 35 except for using the aqueous dispersion as described in Example 52, and evaluated by the method as described in [2.

method of evaluating the glass fiber containing molded material]. The results are shown in Table 1.

Example 54

A polyolefin nonwoven fabric was prepared by the method as described in Example 40 except for using the aqueous dispersion as described in Example 52, and the physical property test was carried out by the method as described in [3. method of evaluating polyolefin fiber containing molded material]. The results are shown in Table 1.

Comparative Example 1

The continuous carbon fiber bundle used in Example 1, as it is, was evaluated by the method as described in [1. method of evaluating the treated carbon fiber material]. The results are shown in Table 1.

Comparative Example 2

An aqueous dispersion was prepared in the same method as that in Example 2 except for using 91 parts by weight of the maleic anhydride modified propylene/ethylene copolymer in place of 91 parts by weight of the propylene/butene/ethylene copolymer described in Example 1. The resulting aqueous dispersion had a yield of 99%, a solid component concentration of 45%, pH of 12 and an average particle diameter of 0.4 $\mu$m (measured by micro track).

Using the resulting aqueous dispersion, a specimen was prepared by the method as described in the method (2) of Example 1, and evaluated by the method as described in [1. method of evaluating the treated carbon fiber material]. The results are shown in Table 1.

Comparative Example 3

An aqueous dispersion was prepared in the same method as that in Example 2 except for changing the amount of the maleic anhydride modified propylene/ethylene copolymer from 9 parts by weight to 5 parts by weight and changing the amount of potassium oleate from 3 parts by weight to 2 parts by weight. The resulting aqueous dispersion had a yield of 99%, a solid component concentration of 45%, pH of 12 and an average particle diameter of 0.5 $\mu$m (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Comparative Example 4

An aqueous dispersion was prepared in the same method as that in Example 2 except for using 33 Parts by weight of the maleic anhydride modified polypropylene (A-3) (having C3 of 66 % by mole, Mw of 50,000, MI of 300 and an acid content of 0.81 mmol) as the propylene resin (A), and 67 parts by weight of a maleic anhydride modified propylene polymer (having C3 of 100 % by mole, Mw of 25,000 and an acid content of 0.81 mmol) as a material of the propylene resin (B). The resulting aqueous dispersion had a yield of 99%, a solid component concentration of 45%, pH of 12 and an average particle diameter of 0.4 $\mu$m (measured by micro track).

Using the resulting aqueous dispersion, a specimen was prepared by the method as described in (2) of Example 1, and evaluated by the method as described in [1. method of evaluating the treated carbon fiber material]. The results are shown in Table 1.

Comparative Example 5

A specimen for the physical property evaluation was prepared by the method as described in Example 35 except for using the aqueous dispersion prepared in Comparative Example 2, and the physical property test was carried out. The results are shown in Table 1.

Comparative Example 6

A specimen for the physical property evaluation was prepared by the method as described in Example 35 except for using the aqueous dispersion prepared in Comparative Example 3, and the physical property test was carried out. The results are shown in Table 1.

Comparative Example 7

A specimen for the physical property evaluation was prepared by the method as described in Example 35 except for using the aqueous dispersion prepared in Comparative Example 4, and the physical property test was carried out. The results are shown in Table 1.

Comparative Example 8

A polyolefin nonwoven fabric was prepared by the method as described in Example 40 except for using the aqueous dispersion prepared in Comparative Example 2, and the physical property test was carried out. The results are shown in Table 1.

Comparative Example 9

A polyolefin nonwoven fabric was prepared by the method as described in Example 40 except for using the aqueous dispersion prepared in Comparative Example 3, and the physical property test was carried out. The results are shown in Table 1.

Comparative Example 10

A polyolefin nonwoven fabric was prepared by the method as described in Example 40 except for using the aqueous dispersion prepared in Comparative Example 4, and the physical property test was carried out. The results are shown in Table 1.

Table 1

| | | Example | | | | | | | | | | | | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 |
| Treated material | Deposited amount | 3 | 3 | 3 | 3 | 3 | 3 | 3 | 3 | 3 | 3 | 3 | 3 | 3 | 3 | 3 | 3 | 3 | 3 | 3 |
| | Surface Coverage | A | A | A | A | A | A | A | A | A | A | A | A | A | A | A | A | C | A | A |
| | Number of fluffs | B | B | B | B | B | B | B | B | B | B | B | B | B | B | B | B | C | B | B |
| | Interfacial shear strength | B | B | BC | BC | BC | BC | BC | BC | BC | BC | BC | BC | BC | BC | BC | BC | C | B | B |
| | | Example | | | | | | | | | | | | | | | | | | |
| | | 20 | 21 | 22 | 23 | 24 | 25 | 26 | 27 | 28 | 29 | 30 | 31 | 32 | 33 | 34 | 45 | 46 | 49 | 52 |
| Treated material | Deposited amount | 3 | 3 | 3 | 3 | 3 | 3 | 3 | 3 | 3 | 3 | 3 | 3 | 1 | 20 | 3 | 3 | 3 | 3 | 3 |
| | Surface Coverage | A | A | A | A | A | A | A | A | A | A | A | A | B | A | A | C | A | A | A |
| | Number of fluffs | B | B | B | B | B | B | C | C | B | C | C | C | C | A | B | C | B | B | B |
| | Interfacial shear strength | B | BC | B | C | BC | BC | BC | BC | BC | BC | C | C | BC | BC | A | C | BC | BC | BC |
| | | Example | | | | | | | | | | | | | | | | | | |
| | | 35 | 36 | 37 | 38 | 39 | 47 | 50 | 53 | | | | | | | | | | | |
| Molded material | Dispersibility | A | A | A | A | A | A | A | A | | | | | | | | | | | |
| | Tensile strength | A | A | B | B | A | B | B | B | | | | | | | | | | | |
| | | Example | | | | | | | | | | | | | | | | | | |
| | | 40 | 41 | 42 | 43 | 44 | 48 | 51 | 54 | | | | | | | | | | | |
| Non-woven fabric | Fibril structure | A | A | A | A | A | A | A | A | | | | | | | | | | | |
| | Paper powder | A | A | A | A | A | A | A | A | | | | | | | | | | | |

Table 1-2

| | | Comparative Example | | | |
|---|---|---|---|---|---|
| | | 1 | 2 | 3 | 4 |
| Treated material | Deposited amount | 0 | 0 | 3 | 3 |
| | Surface Coverage | D | D | B | A |
| | Number of fluffs | D | D | C | C |
| | Interfacial shear strength | D | D | D | D |
| | | Comparative Example | | | |
| | | 5 | 6 | 7 | |
| Molded material I | Dispersibility | D | D | D | |
| | Tensile strength | D | D | C | |
| | | Comparative Example | | | |
| | | 8 | 9 | 10 | |
| Non-woven fabric | Fibril structure | D | D | D | |
| | Paper powder | D | D | D | |

Description of Numerals

1 Creel with a built-in powder clutch
2 Friction pin having a mirror processed surface
3 Fluff counter
4 Driving roller
5 Winder
6 Roller
7 Travelling direction of carbon fiber

## Claims

**1.** An aqueous dispersion for fiber treatment which dispersion comprises:

(A) a first propylene resin comprising 50 to 99 % by mole of a constituting unit derived from propylene,
(B) a second propylene resin which is a propylene resin at least containing a carboxylic acid salt bonded to a polymer chain and contains a group represented by the following formula (1) in a concentration of 0.05 to 5 mmol equivalent weight per 1 gram of the resin;

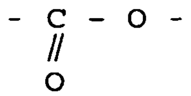
... (1)

(C) an anion type and/or nonion type surfactant, and
(D) water,
wherein resin solid components derived from the resins (A) and (B) are dispersed in the water,
the dispersion comprises 0.3 to 45 parts by weight of the resin (B), 0.5 to 40 parts by weight of the agent (C) based on 100 parts by weight of the resin (A), and has a water content of 3 to 90 % by weight,
the weight average molecular weight of the resin (A) (hereinafter referred to "Mw (a)") and the weight average molecular weight of the resin (B) (hereinafter referred to "Mw(b)") are different each other, the Mw (a) is larger than the Mw (b), and the resin solid components derived from the resins (A) and (B) have an average particle diameter of 0.03 to 3 μm.

**2.** The aqueous dispersion for fiber treatment according to claim 1 wherein the resin (A) is a substantially unmodified propylene resin.

**3.** The aqueous dispersion for fiber treatment according to claim 2 wherein the resin (A) comprises a propylene resin (A-1) having a melt index at 230°C (MI) of not less than 50.

**4.** The aqueous dispersion for fiber treatment according to claim 3 wherein the resin (A-1) has a weight average molecular weight Mw of not less than 30,000 and less than 150,000.

**5.** The aqueous dispersion for fiber treatment according to claim 3 or 4 wherein the resin (A) comprises the resin (A-1) and a propylene resin (A-2) having a weight average molecular weight Mw of not less than 150,000 and not more than 500,000 and containing a constituting unit derived from propylene in an amount of 50 to 99 % by mole.

**6.** The aqueous dispersion for fiber treatment according to claim 5 wherein the weight ratio of the resin (A-1) to the resin (A-2) [(A-1):(A-2)] is 100:0 to 30:70.

**7.** The aqueous dispersion for fiber treatment according to any one of claims 2 to 6 wherein the resin (B) has a weight average molecular weight Mw of 1,000 to 50,000 and contains a constituting unit derived from propylene in an amount of 50 to 100 % by mole.

**8.** The aqueous dispersion for fiber treatment according to claim 1 wherein the resin (A) comprises a propylene resin

(A-1) having a melt index at 230°C (MI) of not less than 50.

**9.** The aqueous dispersion for fiber treatment according to claim 8 wherein the resin (A-1) has a weight average molecular weight of not less than 30,000 and less than 150,000.

**10.** The aqueous dispersion for fiber treatment according to claim 8 or 9 wherein the resin (A) comprises the resin (A-1) and a propylene resin (A-2) having a weight average molecular weight Mw of not less than 150,000 and not more than 500,000 and containing a constituting unit derived from propylene in an amount of 50 to 99 % by mole.

**11.** The aqueous dispersion for fiber treatment according to claim 10 wherein the weight ratio of the resin (A-1) to the resin (A-2) [(A-1):(A-2)] is 100:0 to 30:70.

**12.** The aqueous dispersion for fiber treatment according to any one of claims 8 to 11 wherein the resin (B) has a weight average molecular weight of 1,000 to 50,000 and contains a constituting unit derived from propylene in an amount of 50 to 100 % by mole.

**13.** The aqueous dispersion for fiber treatment according to any one of claims 8 to 12 wherein the resin (A-1) is a propylene resin (A-3) which has a weight average molecular weight Mw of over 50,000 and less than 150, 000, and at least contains a carboxylic acid salt bonded to a polymer chain, a constituting unit derived from propylene in an amount of 50 to 99 % by mole and a group represented by the formula (1)

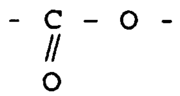 ... (1)

in a concentration of 0.05 to 5 mmol equivalent weight per 1 gram of the resin.

**14.** The aqueous dispersion for fiber treatment according to any one of claims 10 to 13 wherein the resin (A-2) is a propylene resin (A-4) which has a weight average molecular weight Mw of not less than 150, 000 and not more than 500, 000, and at least contains a carboxylic acid salt bonded to a polymer chain, a constituting unit derived from propylene in an amount of 50 to 99 % by mole and a group represented by the formula (1)

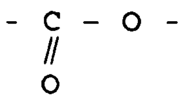 ... (1)

in a concentration of 0.05 to 5 mmol equivalent weight per 1 gram of the resin.

**15.** The aqueous dispersion for fiber treatment according to any one of claims 1 to 14 wherein the resin (B) is a propylene resin (B-1) that further comprises a polymer modified with an unsaturated vinyl group other than olefins.

**16.** The aqueous dispersion for fiber treatment according to claim 13 wherein the resin (A-3) is a propylene resin (A-5) that further comprises a polymer modified with an unsaturated vinyl group other than olefins.

**17.** The aqueous dispersion for fiber treatment according to claim 14 wherein the resin (A-4) is a propylene resin (A-6) that further comprises a polymer modified with an unsaturated vinyl group other than olefins.

**18.** Use of the aqueous dispersion for fiber treatment as defined in any one of claims 1 to 17 for carbon fiber treatment.

**19.** Use of the aqueous dispersion for fiber treatment as defined in any one of claims 1 to 17 for glass fiber treatment.

**20.** Use of the aqueous dispersion for fiber treatment as defined in any one of claims 1 to 17 for polyolefin fiber treatment.

## Patentansprüche

**1.** Wässrige Dispersion zur Faserbehandlung, wobei die Dispersion umfasst:

(A) ein erstes Propylenharz, das 50 bis 99 Mol% einer von Propylen abgeleiteten Aufbaueinheit umfasst,
(B) ein zweites Propylenharz, das ein Propylenharz ist, das zumindest eine Carbonsäuresalz enthält, das an eine Polymerkette gebunden ist und eine Gruppe der folgenden Formel (1) in einer Konzentration von 0,05 bis 5 mmol Äquivalentgewicht pro 1 Gramm des Harzes;

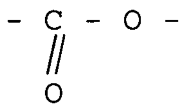

...(1)

(C) ein Tensid vom anionischen Typ und/oder nichtionischen Typ und
(D) Wasser,
worin die von den Harzen (A) und (B) abgeleiteten Harz-Feststoffkomponenten in Wasser dispergiert sind, die Zusammensetzung 0,3 bis 45 Gew.-Teile des Harzes (B), 0,5 bis 40 Gew.-Teile des Mittels (C) auf Basis von 100 Gew.-Teilen des Harzes (A) umfasst und einen Wassergehalt von 3 bis 90 Gew.% aufweist,
das gewichtsgemittelte Molekulargewicht des Harzes (A) (im folgenden als "Mw(a)" bezeichnet) und das gewichtsgemittelte Molekulargewicht des Harzes (B) (im folgenden als "Mw(b)" bezeichnet) unterschiedlich voneinander sind, Mw(a) größer ist als Mw(b) und die von den Harzen (A) und (B) abgeleiteten Harz-Feststoffkomponenten einen mittleren Teilchendurchmesser von 0,03 bis 3 μm haben.

**2.** Wässrige Dispersion zur Faserbehandlung gemäß Anspruch 1, worin das Harz (A) ein im wesentlichen unmodifiziertes Propylenharz ist.

**3.** Wässrige Dispersion zur Faserbehandlung gemäß Anspruch 2, worin das Harz (A) ein Propylenharz (A-1) mit einem Schmelzindex bei 230°C (MI) von nicht weniger als 50 umfasst.

**4.** Wässrige Dispersion zur Faserbehandlung gemäß Anspruch 3, worin das Harz (A-1) ein gewichtsgemitteltes Molekulargewicht Mw von nicht weniger als 30.000 und weniger als 150.000 hat.

**5.** Wässrige Dispersion zur Faserbehandlung gemäß Anspruch 3 oder 4, worin das Harz (A) das Harz (A-1) und ein Propylenharz (A-2), das ein gewichtsgemitteltes Molekulargewicht Mw von nicht weniger als 150.000 und nicht mehr als 500.000 aufweist und eine von Propylen abgeleitete Aufbaueinheit in einer Menge von 50 bis 99 Mol% enthält, umfasst.

**6.** Wässrige Dispersion zur Faserbehandlung gemäß Anspruch 5, worin das Gewichtsverhältnis des Harzes (A-1) zum Harz (A-2) [(A-1):(A-2)] 100:0 bis 30:70 ist.

**7.** Wässrige Dispersion zur Faserbehandlung gemäß irgendeinem der Ansprüche 2 bis 6, worin das Harz (B) ein gewichtsgemitteltes Molekulargewicht Mw von 1.000 bis 50.000 hat und eine von Propylen abgeleitete Aufbaueinheit in einer Menge von 50 bis 100 Mol% enthält.

**8.** Wässrige Dispersion zur Faserbehandlung gemäß Anspruch 1, worin das Harz (A) ein Propylenharz (A-1) mit einem Schmelzindex bei 230°C (MI) von nicht weniger als 50 umfasst.

**9.** Wässrige Dispersion zur Faserbehandlung gemäß Anspruch 8, worin das Harz (A-1) ein gewichtsgemitteltes Molekulargewicht Mw von nicht weniger als 30.000 und weniger als 150.000 hat.

**10.** Wässrige Dispersion zur Faserbehandlung gemäß Anspruch 8 oder 9, worin das Harz (A) das Harz (A-1) und ein Propylenharz (A-2), das ein gewichtsgemitteltes Molekulargewicht Mw von nicht weniger als 150.000 und nicht mehr als 500.000 aufweist und eine von Propylen abgeleitete Aufbaueinheit in einer Menge von 50 bis 99 Mol% enthält, umfasst.

**11.** Wässrige Dispersion zur Faserbehandlung gemäß Anspruch 10, worin das Gewichtsverhältnis des Harzes (A-1) zum Harz (A-2) [(A-1):(A-2)] 100:0 bis 30:70 ist.

**12.** Wässrige Dispersion zur Faserbehandlung gemäß irgendeinem der Ansprüche 8 bis 11, worin das Harz (B) ein gewichtsgemitteltes Molekulargewicht Mw von 1.000 bis 50.000 hat und eine von Propylen abgeleitete Aufbaueinheit in einer Menge von 50 bis 100 Mol% enthält.

**13.** Wässrige Dispersion zur Faserbehandlung gemäß irgendeinem der Ansprüche 8 bis 12, worin das Harz (A-1) ein Propylenharz (A-3) ist, das ein gewichtsgemitteltes Molekulargewicht Mw von über 50.000 und weniger als 150.000 hat und mindestens ein an eine Polymerkette gebundenes Carbonsäuresalz, eine vom Propylen abgeleitete Aufbaueinheit in einer Menge von 50 bis 99 Mol% und eine Gruppe der Formel (1)

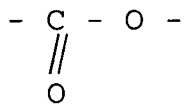

...(1)

in einer Konzentration von 0,05 bis 5 mmol Äquivalentgewicht pro 1 Gramm des Harzes enthält.

**14.** Wässrige Dispersion zur Faserbehandlung gemäß irgendeinem der Ansprüche 10 bis 13, worin das Harz (A-2) ein Propylenharz (A-4) ist, das ein gewichtsgemitteltes Molekulargewicht Mw von nicht weniger als 150.000 und nicht mehr als 500.000 hat, und mindestens ein an eine Polymerkette gebundenes Carbonsäuresalz, eine vom Propylen abgeleitete Aufbaueinheit in einer Menge von 50 bis 99 Mol% und eine Gruppe der Formel (1)

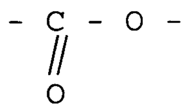

...(1)

in einer Konzentration von 0,05 bis 5 mmol Äquivalentgewicht pro 1 Gramm des Harzes enthält.

**15.** Wässrige Dispersion zur Faserbehandlung gemäß irgendeinem der Ansprüche 1 bis 14, worin das Harz (B) ein Propylenharz (B-1) ist, das weiterhin ein Polymer umfasst, das mit einer ungesättigten Vinylgruppe modifiziert ist, außer Olefine.

**16.** Wässrige Dispersion zur Faserbehandlung gemäß Anspruch 13, worin das Harz (A-3) ein Propylenharz (A-5) ist, das weiterhin ein Polymer umfasst, das mit einer ungesättigten Vinylgruppe modifiziert ist, außer Olefine.

**17.** Wässrige Dispersion zur Faserbehandlung gemäß Anspruch 14, worin das Harz (A-4) ein Propylenharz (A-6) ist, das weiterhin ein Polymer umfasst, das mit einer ungesättigten Vinylgruppe modifiziert ist, außer Olefine.

**18.** Verwendung einer wässrigen Dispersion zur Faserbehandlung, wie in irgendeinem der Ansprüche 1 bis 17 definiert, zur Kohlefaserbehandlung.

**19.** Verwendung einer wässrigen Dispersion zur Faserbehandlung, wie in irgendeinem der Ansprüche 1 bis 17 definiert, zur Glasfaserbehandlung.

**20.** Verwendung einer wässrigen Dispersion zur Faserbehandlung, wie in irgendeinem der Ansprüche 1 bis 17 definiert, zur Polyolefinfaserbehandlung.

## Revendications

**1.** Dispersion aqueuse pour le traitement des fibres laquelle dispersion comprend :

(A) une première résine de propylène comprenant de 50 à 99% en mole d'un motif constitutif dérivé de propylène,

(B) une deuxième résine de propylène qui est une résine de propylène contenant au moins un sel d'acide carboxylique lié à une chaîne polymère et contient un groupe représenté par la formule suivante (1) en une concentration allant de 0,05 à 5 mmol en poids équivalent par 1 gramme de la résine ;

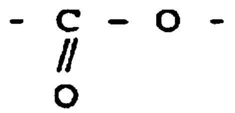

... (1)

(C) un surfactant de type anionique et/ou de type non ionique, et
(D) de l'eau,
où des composants solides de résine dérivés des résines (A) et (B) sont dispersés dans de l'eau,
la dispersion comprend de 0,3 à 45 parties en poids de la résine (B), de 0,5 à 40 parties en poids de l'agent (C) sur la base de 100 parties en poids de la résine (A), et a une teneur en eau allant de 3 à 90% en poids,
le poids moléculaire moyen en poids de la résine (A) (ci-après dénommé « Mw(a) »), et le poids moléculaire moyen en poids de la résine (B) (ci-après dénommé « Mw(b) ») sont différents l'un de l'autre, le Mw(a) est plus grand que le Mw(b), et les composants solides de résine dérivés des résines (A) et (B) ont un diamètre moyen de particules allant de 0,03 à 3 μm.

**2.** Dispersion aqueuse pour le traitement des fibres selon la revendication 1, dans laquelle la résine (A) est une résine de propylène essentiellement non modifiée.

**3.** Dispersion aqueuse pour le traitement des fibres selon la revendication 2, dans laquelle la résine (A) comprend une résine de propylène (A-1) ayant un indice de fusion à 230°C (MI) d'au moins 50.

**4.** Dispersion aqueuse pour le traitement des fibres selon la revendication 3, dans laquelle la résine (A-1) a un poids moléculaire moyen en poids Mw d'au moins 30000 et inférieur à 150000.

**5.** Dispersion aqueuse pour le traitement des fibres selon la revendication 3 ou 4, dans laquelle la résine (A) comprend la résine (A-1) et une résine de propylène (A-2) ayant un poids moléculaire moyen en poids Mw d'au moins 150000 et d'au plus 500000 et contenant un motif constitutif dérivé de propylène en une quantité allant de 50 à 99% en mole.

**6.** Dispersion aqueuse pour le traitement des fibres selon la revendication 5, dans laquelle le rapport en poids de la résine (A-1) sur la résine (A-2) [(A-1) : (A-2)] se trouve dans une plage allant de 100 : 0 à 30 : 70.

**7.** Dispersion aqueuse pour le traitement des fibres selon l'une quelconque des revendications 2 à 6, dans laquelle la résine (B) a un poids moléculaire moyen en poids Mw allant de 1000 à 50000 et contient un motif constitutif dérivé de propylène en une quantité allant de 50 à 100% en mole.

**8.** Dispersion aqueuse pour le traitement des fibres selon la revendication 1, dans laquelle la résine (A) comprend une résine de propylène (A-1) ayant un indice de fusion à 230°C (MI) d'au moins 50.

**9.** Dispersion aqueuse pour le traitement des fibres selon la revendication 8, dans laquelle la résine (A-1) a un poids moléculaire moyen en poids d'au moins 30000 et inférieur à 150000.

**10.** Dispersion aqueuse pour le traitement des fibres selon la revendication 8 ou 9, dans laquelle la résine (A) comprend la résine (A-1) et une résine de propylène (A-2) ayant un poids moléculaire moyen en poids Mw d'au moins 150000 et d'au plus 500000 et contenant un motif constitutif dérivé de propylène en une quantité allant de 50 à 99% en mole.

**11.** Dispersion aqueuse pour le traitement des fibres selon la revendication 10, dans laquelle le rapport en poids de la résine (A-1) sur la résine (A-2) [(A-1) : (A-2)] se trouve dans une plage allant de 100 : 0 à 30 : 70.

**12.** Dispersion aqueuse pour le traitement des fibres selon l'une quelconque des revendications 8 à 11, dans laquelle la résine (B) a un poids moléculaire moyen en poids allant de 1000 à 50000 et contient un motif constitutif dérivé de propylène en une quantité allant de 50 à 100% en mole.

**13.** Dispersion aqueuse pour le traitement des fibres selon l'une quelconque des revendications 8 à 12, dans laquelle la résine (A-1) est une résine de propylène (A-3) qui a un poids moléculaire moyen en poids Mw supérieur à 50000 et inférieur à 150000, et contient au moins un sel d'acide carboxylique lié à une chaîne polymère, un motif constitutif dérivé de propylène en une quantité allant de 50 à 99% en mole et un groupe représenté par la formule (1)

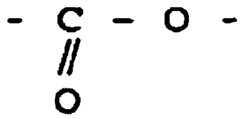

...(1)

en une concentration allant de 0,05 à 5 mmol en poids équivalent par 1 gramme de la résine.

**14.** Dispersion aqueuse pour le traitement des fibres selon l'une quelconque des revendications 10 à 13, dans laquelle la résine (A-2) est une résine de propylène (A-4) qui a un poids moléculaire moyen en poids Mw d'au moins 150000 et d'au plus 500000, et contient au moins un sel d'acide carboxylique lié à une chaîne polymère, un motif constitutif dérivé de propylène en une quantité allant de 50 à 99% en mole et un groupe représenté par la formule (1)

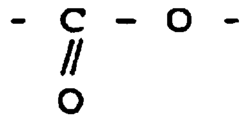

...(1)

en une concentration allant de 0,05 à 5 mmol en poids équivalent par 1 gramme de la résine.

**15.** Dispersion aqueuse pour le traitement des fibres selon l'une quelconque des revendications 1 à 14, dans laquelle la résine (B) est une résine de propylène (B-1) qui comprend en outre un polymère modifié avec un groupe vinyle insaturé autre que les oléfines.

**16.** Dispersion aqueuse pour le traitement des fibres selon la revendication 13, dans laquelle la résine (A-3) est une résine de propylène (A-5) qui comprend en outre un polymère modifié avec un groupe vinyle insaturé autre que les oléfines.

**17.** Dispersion aqueuse pour le traitement des fibres selon la revendication 14, dans laquelle la résine (A-4) est une résine de propylène (A-6) qui comprend en outre un polymère modifié avec un groupe vinyle insaturé autre que les oléfines.

**18.** Utilisation de la dispersion aqueuse pour le traitement des fibres telle que définie dans l'une quelconque des revendications 1 à 17 pour le traitement des fibres de carbone.

**19.** Utilisation de la dispersion aqueuse pour le traitement des fibres telle que définie dans l'une quelconque des revendications 1 à 17 pour le traitement des fibres de verre.

**20.** Utilisation de la dispersion aqueuse pour le traitement des fibres telle que définie dans l'une quelconque des revendications 1 à 17 pour le traitement des fibres polyoléfinique.

[Fig. 1]

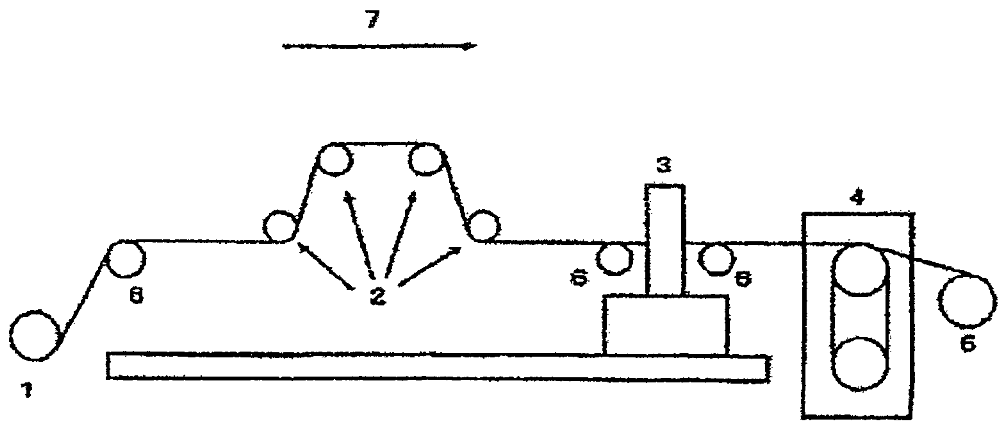

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H61994107442 A
- WO 2006101269 A
- JP S56198191052 A
- JP H71995008933 B
- JP H71995096647 B
- JP H51993039975 B


### Non-patent literature cited in the description


- **DRZAL, L.T.** *Mater. Sci. Eng.,* 1990, vol. A126, 289